# EUROPÄISCHE PATENTSCHRIFT

(11) **EP 0 726 509 B1**
(45) Veröffentlichungstag und Bekanntmachung des Hinweises auf die Patenterteilung: **12.01.2000**
(21) Anmeldenummer: 96104343.7
(22) Anmeldetag: 07.09.1994
(51) Int. Cl.: G05B 19/4093, G05B 19/05

(54) **Dialogorientiertes Programmiersystem für eine CNC-Werkzeugmaschine**
Dialogue orientated programming system for a CNC machine tool
Système de programmation conversationnelle pour une machine-outil de CNC

(30) Priorität: 07.09.1993 DE 4330220; 07.09.1993 DE 4330221
(43) Veröffentlichungstag der Anmeldung: 14.08.1996
(62) Teilanmeldung aus: 94114039.4
(73) Patentinhaber: Traub Drehmaschinen GmbH, 73262 Reichenbach (DE)
(72) Erfinder: Waldenmaier, Peter, 73054 Eislingen (DE); Monz, Joachim, 73061 Ebersbach (DE); Wirth, Helmuth, 73734 Esslingen (DE)
(74) Vertreter: Schmidt, Steffen J., Dipl.-Ing.

(56) Entgegenhaltungen:
- EP-A- 0 236 828
- EP-A- 0 404 950
- DE-A- 4 014 595

## Beschreibung

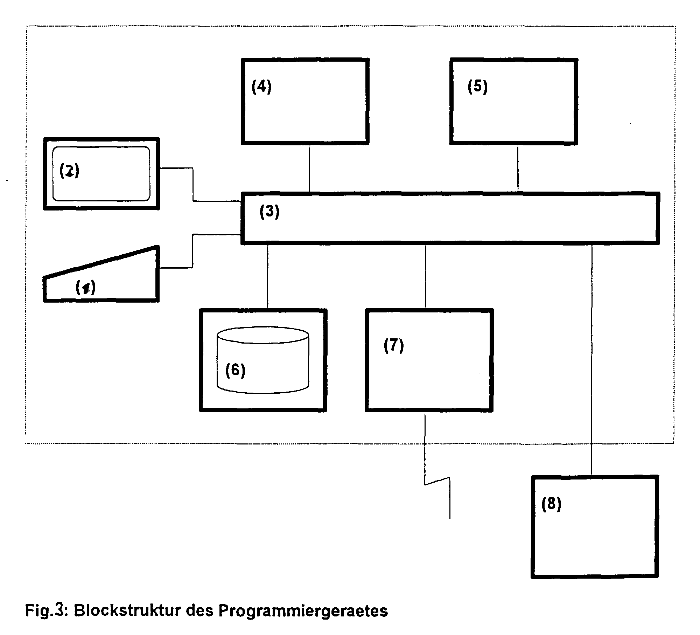

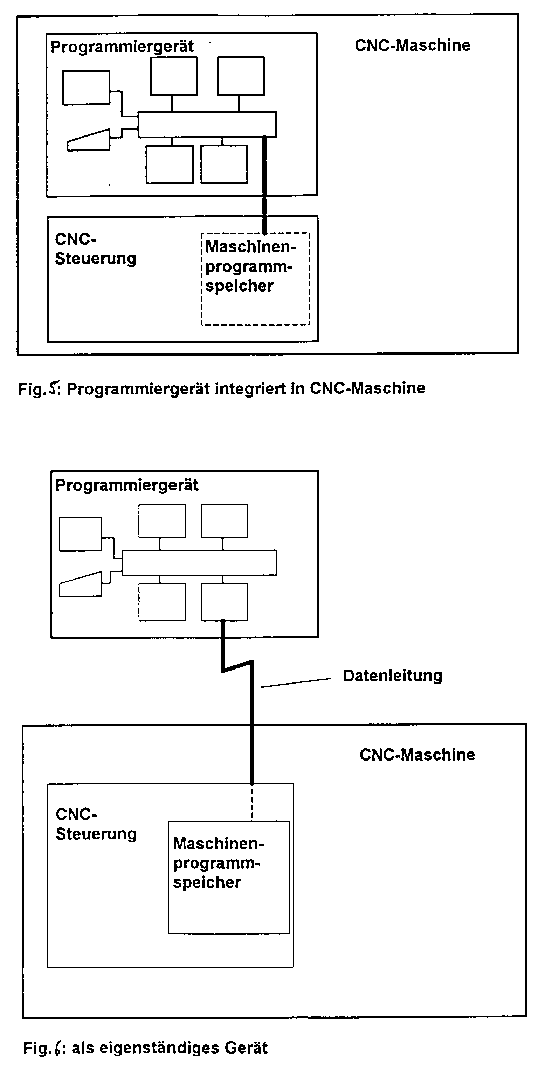

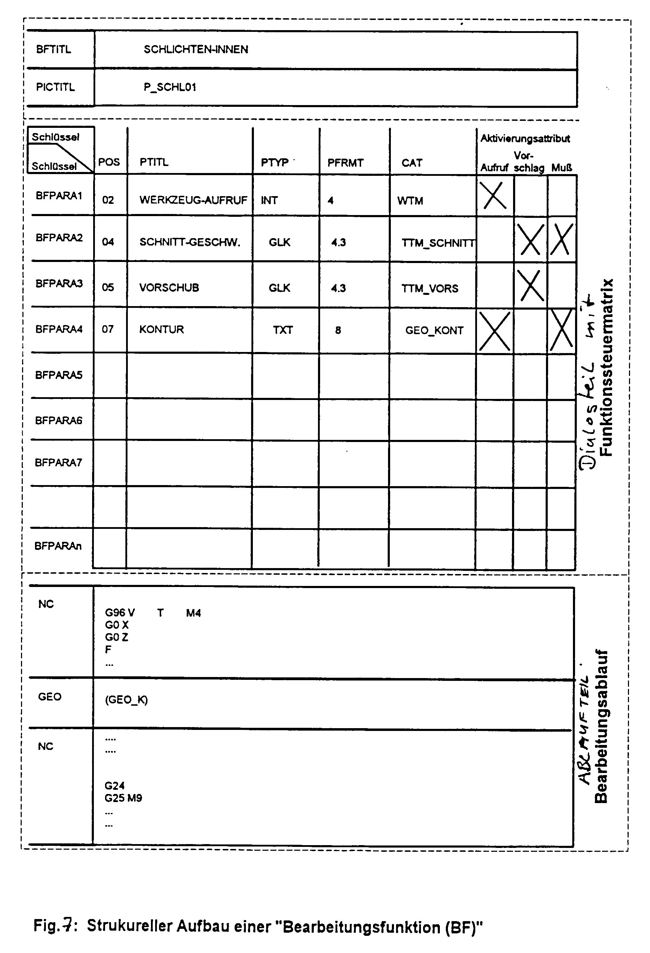

Die Erfindung betrifft ein graphisch interaktives, dialogorientiertes Programmiersystem zur Erzeugung von Programmen zur Steuerung des Bearbeitungsprozesses für die Fertigung eines Werkstückes auf einer numerisch gesteuerten Werkzeugmaschine (CNC-Werkzeugmaschine). Ein derartiges Programmiersystem ist ausgestattet mit einer Tastatur 1 zur Eingabe von Informationen, einem grafikfähigen CRT-Bildschirm 2 zur Anzeige von graphischen und numerischen Informationen, einer Zentralprozessoreinheit 3 zur Verarbeitung der Eingabeinformationen, einer Systemspeichereinheit 4, einem Arbeitsspeicher 5, einem nicht flüchtigen Hintergrundspeicher 6 und einer Schnittstelleneinheit 7 zum Austausch von Informationen mit anderen Geräten (Fig.3) angeordnet, integriert in der CNC-Steuerung der Werkzeugmaschine mit direktem Zugriff auf den Steuerdatenspeicher 8 der CNC-Steuerung, oder als eigenständiges externes Gerät, unabhängig von der Maschine. Die Verbindung zum Austausch von Informationen mit der CNC-Steuerung der Maschine erfolgt hier über die oben angesprochene Schnittstelleneinheit (Fig.5 und Fig.6)

Solche Programmiersysteme sind nach dem Stand der Technik als sogenannte Auto-Programmiersysteme (Auto-Programming-Systems) oder auch als WOP-Systeme vorbekannt und in Technische Rundschau, 16. September 1988, Erweiterter Sonderdruck 08.90 "Vorteile durch werkstattorientierte Programmierung (WOP)", sowie in den DE-3240000C2, DE-3308765C2, sowie der DE-3240974C2 angegeben und dort näher beschrieben. Diese Geräte funktionieren prinzipiell so, daß dem Anwender durch fest in dem Programmiersystem vorgegebene Dialoge Eingaben abverlangt werden, um Programme zur Steuerung des Bearbeitungsprozesses für die Fertigung eines Werkstükkes auf einer numerisch gesteuerten Werkzeugmaschine zu erzeugen. Die Ergebnisse dieser Eingaben werden graphisch am Bildschirm zur Kontrolle angezeigt.

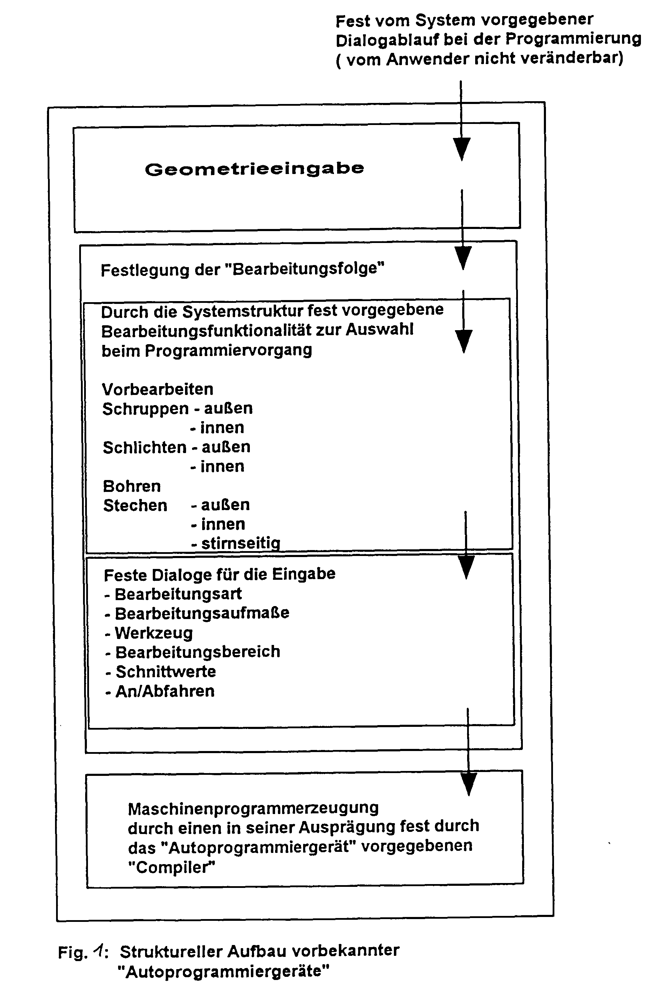

Der zeitliche Ablauf und die Form der Dialoge sind dabei durch die funktionelle Ausprägung dieser Programmiersysteme festgelegt und können durch den Anwender nicht mehr verändert werden. Aus diesen unveränderbaren, von diesen Programmiersystemen dem Benutzer angebotenen Dialogen und den durch diese Dialoge angeforderten Eingaben wird von den Programmiersystemen das Programm zur Steuerung des Bearbeitungsprozesses der CNC-Werkzeugmaschine in einem Übersetzungslauf erzeugt. Die Form des erzeugten Programmes zur Steuerung der CNC-Werkzeugmaschine wird dabei ebenfalls durch die funktionelle Ausprägung dieser Programmiersysteme festgelegt und kann deshalb vom Anwender nicht beeinflußt werden. Die Freiheitsgrade für den Anwender bei der Programmerstellung sind also auf die Auswahl der im Dialog angebotenen Funktionen, die Festlegung der Reihenfolge dieser Funktionen, sowie auf die vom Dialog des Programmiersystemes fest vorgegebenen Eingabemöglichkeiten für diese Funktionen beschränkt, wie dies in Fig. 1 schematisch veranschaulicht ist. Der Anwender kann also den im Programmiersystem verfügbaren Funktionsumfang weder bezüglich der Dialogführung noch im Hinblick auf den vom System erzeugten Programmaufbau für die Steuerung der CNC-Werkzeugmaschine beeinflussen. Der Funktionsumfang des Programmiersystemes kann ebenfalls nicht vom Anwender um eigene speziell von Ihm benötigte Funktionen erweitert werden.

Die Ausprägung dieser sogenannten Auto-Programmiersysteme hat zur Folge, daß die Erstellung eines Programmes zur Steuerung der Werkzeugmaschine mit diesen Geräten nur in einem vom Gerät selbst vorgegebenen Rahmen möglich ist. Dieser Rahmen muß vom Hersteller des Programmiersystems möglichst allgemeingültig festgelegt werden, damit möglichst viele Anwenderanforderungen abgedeckt werden. Diese Verallgemeinerung hat jedoch zwangsläufig zur Folge, daß die Funktionen nicht optimal auf speziell beim einzelnen Anwender auftretende Anforderungen angepaßt sein können. Der Anwender kann die Ausprägung der Programmiersysteme also auch nicht im Hinblick auf sein spezielles Zerspanungs-Know-How verändern. Dies bedeutet fehlende Adaptionsmöglichkeiten und fehlende Flexibilität.

Eine Möglichkeit zur Veränderung und Erstellung von Dialogfolgen und Darstellungen zur Bedienung von Fertigungseinrichtungen ist in DE 42 39 446 Al dargestellt. Hier wird die Beeinflussung für den Dialog zur Steuerung von den im Fertigungssystem fest vorgegebenen Funktionsabläufen (Prozessen) beschrieben. Der Funktionsumfang kann jedoch auch hier nicht ohne konstruktiven Eingriff in die Struktur und das Funktionsmodell der Bedienungseinrichtung erfolgen.

Eine Optimierung des, von diesen vorbekannten Programmiersystemen erzeugten Programmes zur Steuerung der Werkzeugmaschine, kann vom Anwender im "Detail" nur in dem durch einen Übersetzungslauf des Programmiersystemes erzeugten Maschinenprogramm ausgeführt werden. Hierbei zeigt sich jedoch sofort zwangsläufig ein weiterer Nachteil dieser Autoprogrammiergeräte.

Die zu dem im Autoprogrammiergerät erstellten Programm gehörenden Daten müssen zwangsläufig auch die Dialoginformationen enthalten, die zu diesem Programm geführt haben, damit eine später ggf. notwendige Änderung des Programmes ebenfalls dialoggeführt im Programmiersystem durchgeführt werden kann. Das so erstellte Programm wird allgemein als Quellprogramm bezeichnet.

Die Steuerung der Werkzeugmaschine kann dieses so erstellte Quellprogramm und die darin noch enthaltenen Dialoginformationen nicht verarbeiten. Aus dem sogenannten Quellprogramm muß also durch das Programmiersystem in einem Übersetzungslauf ein an der Steuerung der Werkzeugmaschine ablauffähiges Programm ohne Dialoginformationen erzeugt werden. Dieses so erzeugte Programm wird allgemein als Maschinenprogramm bezeichnet.

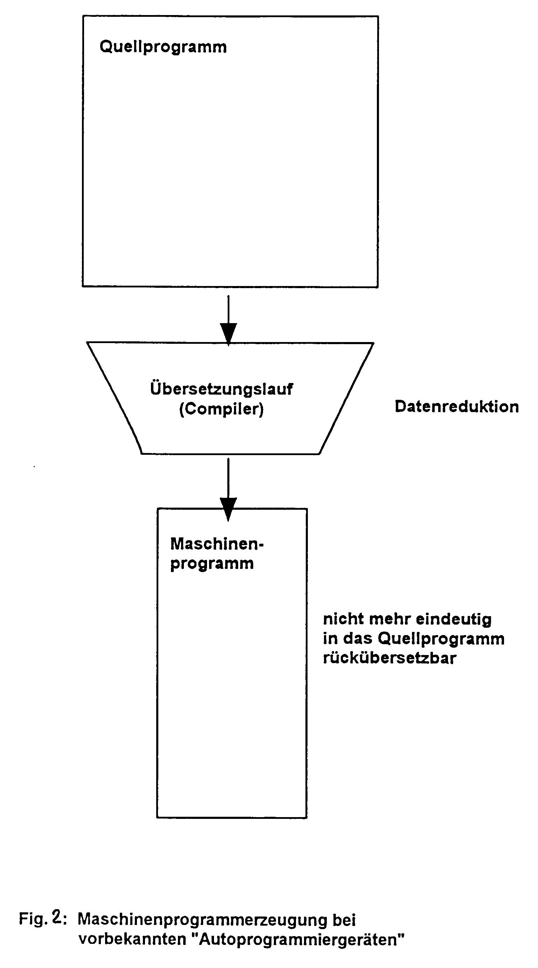

Bei dem beschriebenen Übersetzungslauf findet also eine Datenreduktion statt, die dazu führt, daß dieses Maschinenprogramm nicht mehr in den ursprünglichen, vom Programmiersystem verarbeitbaren Zustand zurückübersetzt werden kann. Dieses Problem der Datenreduktion ist auch aus der Funktionsweise von sogenannten Hochsprachen-Compilern bekannt. Ein durch einen Compiler aus einem Quellprogramm erzeugtes Maschinenprogramm ist ebenfalls nicht eindeutig und kann nicht in das ursprüngliche Quellprogramm zurückübersetzt werden, wie dies in Fig.2 veranschlauicht ist.

Durch die obigen Ausführungen wird deutlich, daß durch den Anwender im Maschinenprogramm durchgeführte Änderungen in den beschrieben Autoprogrammierystemen nicht in das Quellprogramm, das mit dem Programmiersystem im Dialog bearbeitbar ist, zurückgeführt werden können. Der Anwender hat also nach Änderungen im CNC-Werkzeugmaschinenprogramm zwei grundsätzlich unterschiedliche Programme. Daraus ergibt sich zwangsläufig das Problem der Rückdokumentation von Programmänderungen, das z.B. in Thomas Schulz et al. "Defizite der heutigen Werkstückprogrammierung", Werkstatt und Betrieb 127 (1994) 1-2, (Carl Hauser Verlag München 1994) in Verbindung mit Autoprogrammiersystemen und WOP-Systemen beschrieben ist. Als weiterer Nachteil dieser bekannten Programmiersysteme ist zu sehen, daß Eingaben und Änderungen bei der Programmerstellung nicht zu jedem Zeitpunkt beliebig frei wählbar dialoggeführt und graphisch interaktiv, oder im NC-Satzformat des Maschinenprogramms durchgeführt werden können, da das Maschinensteuerprogramm ( im NC-Satzformat ) bei der dialoggeführten Eingabe noch nicht zur Verfügung steht und erst später durch den Übersetzungslauf erzeugt wird.

Die DE-A-40 14 595 beschreibt eine CAD/CAM-Einrichtung, die Bearbeitungsattribute sowie die relative Bearbeitungsbahn und die Bearbeitungsreihenfolge beinhaltende Bearbeitungsablauf-Informationen, die in einem Speicherteil gespeichert sind, der jedem einzelnen geometrischen Element jeder Form eines Objektes zugeordnet ist. Die Bearbeitungsablauf-Information kann je nach Bedarf modifiziert und wieder gespeichert werden, so daß es möglich ist, Informationen betreffend Spezifikationen von Bearbeitungsmethoden interaktiv einzugeben. NC-Daten werden zur Bearbeitung einer geometrischen Form auf der Basis von in ihrem Speicherteil gespeicherten Informationen erzeugt. Damit ist es gemäß diesem Stand der Technik möglich, die NC-Daten für alle geometrischen Formen auch dann insgesamt auszugeben, wenn für einzelne Teile einer geometrischen Form des Objekts gemischte bestimmte Spezifikationen von Bearbeitungsbedingungen und eine gemeinsame Spezifikation von Bearbeitungsbedingungen für eine Einheit der geometrischen Form des Objekts vorliegen.

Aus der EP-A-0 404 950 ist eine interaktive graphische Steuerung für eine NC-Maschine bekannt, bei der ein NC-Programm verändert werden kann und die Veränderung im Rahmen einer Bearbeitungssimulation auf einem Bildschirm dargestellt wird, um das NC-Programm überprüfen zu können. Bei diesem Stand der Technik wird die Bearbeitungssimulation unterbrochen, wenn ein Programmeditierbefehl eingegeben wird und die Bearbeitungssimulation wird durch die automatische Programmiereinrichtung gemäß dem NC-Programm ausgeführt, das von der NC-Steuerung bereitgestellt wird. Wenn ein neuer NC-Satz eingegeben wird, wird das NC-Programm unter Verwendung des NC-Satzes mit Hilfe der numerischen Steuerung editiert. Die Bearbeitungssimulation und die Editierung des NC-Programms kann bewirkt werden, ohne daß die Betriebsart der NC-Steuerung gewechselt wird.

Die WO 93/01703 offenbart einen konfigurierbaren Mensch-Maschine-Kommunikationsbereich für Werkzeugmaschinen- oder Robotersteuerungen, der zunächst eine universelle Ausprägung aufweist, die auf beliebige Anwendungsfälle zugeschnitten werden kann. Eine Informationsaufbereitung führt zu Steuerdaten, die von einem integrierten Steuerungskern universell verarbeitet werden können, so daß die Ansteuerung der Maschinen- und Roboterantriebe sowie der Peripherie gewährleistet ist.

Die EP-A-0 524 344 offenbart eine konfigurierbare Werkzeugmaschinensteuerung mit einer Vielzahl von Funktionsobjekten. Jedes Funktionsobjekt weist neben einem fakultativen Bedienteil einen Prozedurteil sowie einen Kommunikationsteil auf. Eine Konfiguration der Werkzeugmaschinensteuerung ist als konkrete Ausprägungsvariante von Funktionsobjekten durch die Kombination dieser Objekte zu einem oder mehreren Prozessen realisierbar.

Aus der EP-A-0 553 621 ist eine programmierbare Computersteuerung für eine Werkzeugmaschine bekannt, die ein zwischen den CNC-Teil und die Maschine geschaltetes Anpaßsteuermodul zur Steuerung der Maschinenfunktionen aufweist. Zur einfachen Erweiterbarkeit der Werkzeugmaschine um weitere Maschinenhilfsfunktionen ist ein weiteres Anpaßsteuermodul vorgesehen, welches über eine weitere Schnittstelle mit dem CNC-Teil verbunden ist und in dem ein weiteres Systemprogrammteil abspeicherbar ist, mit dem weitere vom CNC-Teil empfangene Steuerbefehle in erweiterte Maschinenbewegungen umsetzbar sind.

Die US-A-4,204,253 offenbart eine Programmierkonsole zum Erzeugen und Korrigieren eines Anwenderprogramms, das aus einer Reihe von Programmschritten besteht, die jeweils einen Funktionscode und mindestens einen Parameterwert aufweisen. Der Funktionscode und der mindestens eine Parameterwert werden von Anzeigeeinrichtungen der Programmierkonsole angezeigt, und Eingabeeinrichtungen sind vorgesehen, um eine Funktion auszuwählen und geeignete Parameterwerte einzugeben.

Die DE-A-35 45 957 offenbart ein Verfahren und eine Schaltungsanordnung zur automatischen Abarbeitung von Einrichtefunktionen in numerischen Steuerungen, wobei Bearbeitungsprogramme, Bearbeitungsparameter und maschinenspezifische Daten in dafür vorgesehene Speicher eingegeben und zur Abarbeitung durch eine Bearbeitungseinheit aus diesen Speichern entnommen werden. Um den Bedienungsaufwand im Einrichtebetrieb zu verringern, werden die Einrichtefunktionen als parametrisierte Programme durch die Bearbeitungseinheit aufbereitet und die in der Programmfolge benötigten Einrichteparameter nach Auslösung durch Bediensignale definiert und bearbeitet.

Die EP-A-0 557 681 zeigt ein Verfahren und eine Anordnung zum Auswählen von Parametern in einer programmgesteuerten Steuereinheit, wobei durch Schalter Einträge anwählbar sind, die den gewünschten Parametern entsprechen und den Adressen der Parameter in einer Systemdatenbasis zugeordnet sind. Die Parameter sind vorzugsweise länder- oder sprachspezifische Daten, so daß beispielsweise eine Kommunikationsanlage auf einfache Weise auf die Erfordernisse verschiedener Länder und/oder Sprachen eingestellt werden kann.

Aus EP-0 236 828 ist eine speicherprogrammierbare Steuerung bekannt, bei der gemäß eines vorgegebenen Steuerprogramms ein Maschinenprogramm für eine Werkzeugmaschine erzeugt wird und das Maschinenprogramm in einem Speicherbereich der Werkzeugmaschine abgelegt wird, um den Steuerungsablauf der Werkzeugmaschine vorzugeben. Systembedingte Zusatzinformation, die in dem Steuerprogramm vorhanden sind, aber nicht für den Steuerungsablauf der Werkzeugmaschine in dem Maschinenprogramm enthalten sein müssen, werden von den für das Maschinenprogramm unbedingt erforderlichen Information getrennt und separat in einem Speicher der Werkzeugmaschine gespeichert. Für eine Überprüfung des Maschinenprogramms können das Maschinenprogramm und die systembedingten Zusatzinformation zusammen gefügt werden, um das ursprüngliche Steuerungsprogramm zu erhalten. Wird nur das Maschinenprogramm geändert, kann kein entsprechendes Steuerprogramm erzeugt werden, da die systembedingten unveränderten Zusatzinformationen nicht mehr dem geänderten Maschinenprogramm zugeordnet werden können. Des weiteren ist diese Steuerung nur auf solche Werkzeugmaschinen beschränkt, die zusätzliche Speicher für die systembedingten Zusatzinformationen aufweisen.

Ausgehend von diesem Stand der Technik liegen der Erfindung folgende Aufgaben zugrunde:

Das erfindungsgemäße Programmiersystem soll so gesteuert sein, daß der funktionale Umfang des Gerätes bezüglich der allgemeinen Dialogführung den bei der Programmerstellung mit diesem System zur Auswahl angebotenen Funktionen mit zugehörigem Dialog und der zu diesen Funktionen gehörenden Ablaufsequenz, die die Steuerung der CNC-Werkzeugmaschine bewirkt, wahlfrei vom Anwender entsprechend seiner Anforderungen geändert, ergänzt oder neu erstellt werden kann, ohne daß Änderungen in der Grundstruktur des Programmiersystems durchgeführt werden müssen.

Weiterhin sollen die Änderungen, die vom Anwender zur Optimierung im Maschinenprogramm CNC-Satz-Ebene im G-Code durchgeführt werden, sofort im Dialogprogramm (Quellprogramm) zur Verfügung stehen.

Außerdem sollen Änderungen wahlweise dialoggeführt, graphisch interaktiv, oder direkt auf NC-Satz-Ebene im G-Code durchgeführt werden können. Eingriffe zur Programmerstellung und -änderung sollen zu jedem Zeitpunkt beliebig frei auf allen Eingabeebenen durchgeführt werden können.

Das Programmiersystem ist zu diesem Zweck durch die Merkmale des Anspruchs 1 gekennzeichnet.

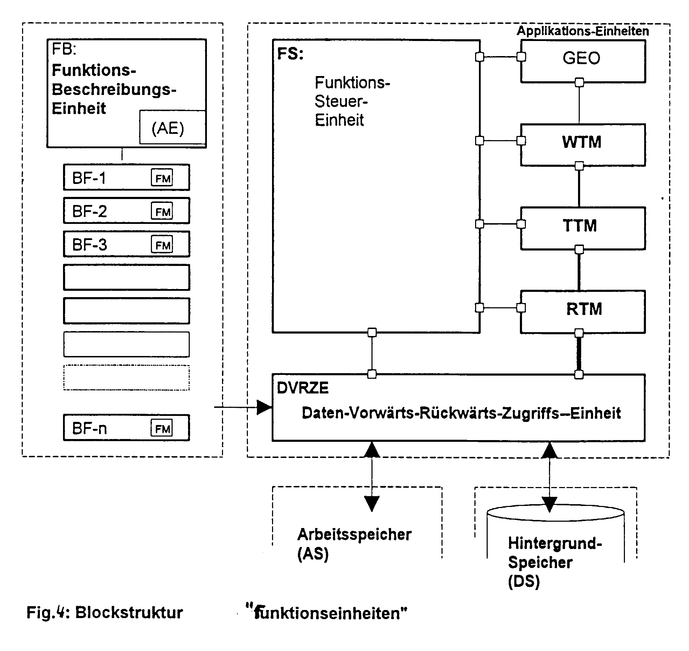

In der zentralen Systemspeichereinheit ist vorzugsweise eine Vorrichtung angeordnet, welche aus folgenden Funktionseinheiten gebildet ist:
- eine Funktionsbeschreibungseinheit, mit der sogenannte Bearbeitungsfunktionen (BF) erstellt werden, welche bei der späteren Programmerstellung für die Steuerung des Bearbeitungsprozesses zur Auswahl und Parametrisierung im Dialog vorgelegt werden,
- eine Funktionssteuereinheit, welche den Dialogablauf am CRT-Bildschirm entsprechend dem Dialogbeschreibungsteil der jeweils ausgewählten Bearbeitungsfunktion (BF) steuert, und dabei ggf. sogenannte Applikationseinheiten startet, welche in einer Funktionssteuermatrix aktiviert sind,
- Applikationseinheiten, welche im Programmiersystem standardmäßig vorhanden sind und entweder von der Funktionssteuereinheit selbständig aufgerufen werden, oder vom Anwender wahlfrei aufgerufen werden können,
- Eine Daten-Vorwärts-Rückwärts-Zugriffs-Einheit(DVRZE) welche sämtliche Datenzugriffe im Programmiersystem über ein Datenstellwerk steuert, wobei die Datenzugriffspfade entsprechend der von der Funktionssteuereinheit angelegten Zugriffsschlüssel hergestellt werden, besteht, und von der Zentralprozessoreinheit zur Verarbeitung der Eingabeinformationen verwendet wird. Dies ist in Fig. 4 veranschaulicht.

Das Programmiersystem ist zweckmäßig integriert in der CNC-Steuerung der Werkzeugmaschine mit direktem Zugriff auf den Steuerdatenspeicher der CNC-Steuerung, oder als eigenständiges externes Gerät, unabhängig von der Maschine. Die Verbindung zum Austausch von Informationen mit der CNC-Steuerung der Maschine erfolgt hier über die oben angesprochene Schnittstelleneinheit angeordnet (siehe Fig.5 und Fig.6).

Der strukturelle Aufbau des Programmiersystemes ist in den Fig.3 und Fig.4 gezeigt.

Mit der Funktionsbeschreibungseinheit (FB) werden sogenannte Bearbeitungsfunktionen (BF) erstellt. Eine Bearbeitungsfunktionen (BF) besteht immer aus dem Dialogteil (DIA), welcher die zu dieser Bearbeitungsfunktionen (BF) gehörende Dialogführung beschreibt und dem Bearbeitungsablaufteil (ABLAUF), welcher die zu der Bearbeitungsfunktionen (BF) gehörenden Steuersequenz zur Steuerung der Werkzeugmaschine enthält.

Mit der Funktionsbeschreibungseinheit (FB) werden also die Bearbeitungsfunktionen (BF) erstellt, welche bei der späteren Programmerstellung für die Steuerung eines Bearbeitungsprozesses an der Werkzeugmaschine, durch das Programmiersystem im Dialog zur Auswahl angeboten werden.

Der Funktionsumfang des Programmiersystemes wird also durch die Funktionsbeschreibungseinheit (FB) geändert oder ggf. vollständig neu erstellt. Die im Programmiersystem wahlfrei verfügbaren Applikationseinheiten (APPL) werden durch die in der Funktionsbeschreibungseinheit (FB) enthaltenen Aktivierungseinheit (Ä) einem Eingabeparameter zugeordnet und der Zugang durch das Setzen des entsprechenden Kategorie Schlüssels (CAT) aktiviert.

Auf diese Weise wird die Funktionssteuermatrix (FM) erzeugt (Fig.7).

Die Funktionssteuereinheit (FS) wird bei der Programmerstellung für einen gewünschten Bearbeitungsprozeß der Maschine gestartet. Sie steuert den Dialogablauf am CRT-Bildschirm entsprechend dem Dialogteil der ausgewählten Bearbeitungsfunktion (BF).

Sie startet dabei ggf. die Applikationseinheiten (APPL) welche in der Bearbeitungsfunktion (BF) aktiviert sind.

Die Funktionssteuereinheit überwacht Eingaben vom Anwender und führt die Eingaben der ausgewählten Bearbeitungsfunktionen (BF) zu, wodurch aus dieser in der Funktionsbeschreibungseinheit (FB) wertfrei erstellten Bearbeitungsfunktionen (BF) ein mit aktuellen Werten versehener Programmabschnitt wird.

Applikationseinheiten (APPL) sind Hilfsfunktionen, welche im Programmiersystem zur Verfügung stehen und vom Anwender wahlfrei aufgerufen werden können. Der Funktionsaufruf kann entweder manuell durch Drücken der entsprechenden Funktionstaste erfolgen, oder wird von der Funktionssteuereinheit selbständig durchgeführt, wenn eine Applikationseinheit (APPL) in der verwendeten Bearbeitungsfunktionen (BF) aktiviert ist.

Solche Applikationseinheiten sind zum Beispiel:

Geometrieeditor und -Prozessor (GEO) zur graphisch interaktiven Eingabe von Bearbeitungskonturen.

Technologie-Tabellen-Modul (TTM) zum Vorschlag von Schnittwerten z.B. Vorschübe und Schnittgeschwindigkeit für die Werkzeugbewegung an der Maschine.

Werkzeugverwaltungs-Modul (WTM).

Werkzeugmagazinverwaltung (RTM).

Das Programmiersystem ist jederzeit durch weitere solche Applikationseinheiten (APPL) erweiterbar.

Die Daten-Vorwärts-Rückwärts-Zugriffs-Einheit (DVRZE) steuert sämtliche Datenwege im Programmiersystem. Das heißt den einzelnen Funktionseinheiten ist selbst nicht bekannt, an welcher Position im Speicher die zum jeweiligen Zeitpunkt benötigten Daten liegen. Dies bedeutet weiter, daß die einzelnen Funktionseinheiten keine Kenntnis über den genauen Aufbau (Reihenfolge, Format) z.B. der Bearbeitungsfunktionen (BF) oder des beim Programmiervorgang erstellten Programms haben müssen.

Der Zugang auf benötigte Datensätze wird von der Daten-Vorwärts-Rückwärts-Zugriffs-Einheit (DVRZE) grundsätzlich über sogenannte Schlüssel hergestellt.

Die Daten-Vorwärts-Rückwärts-Zugriffs-Einheit (DVRZE) ist zur Herstellung des Datenzugangs mit einer hier als Datenstellwerk (DSW) bezeichneten Funktionseinheit ausgestattet.

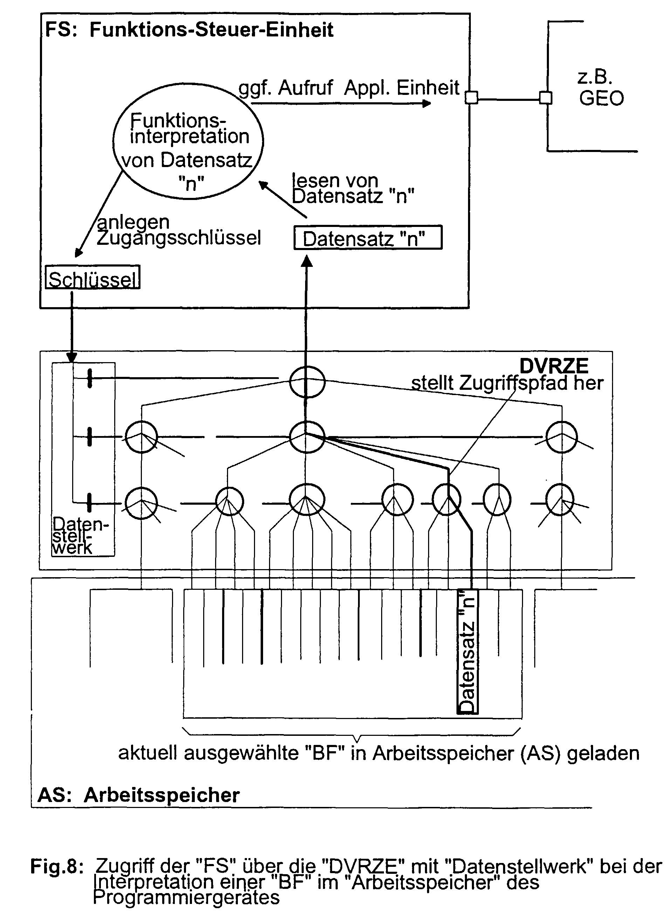

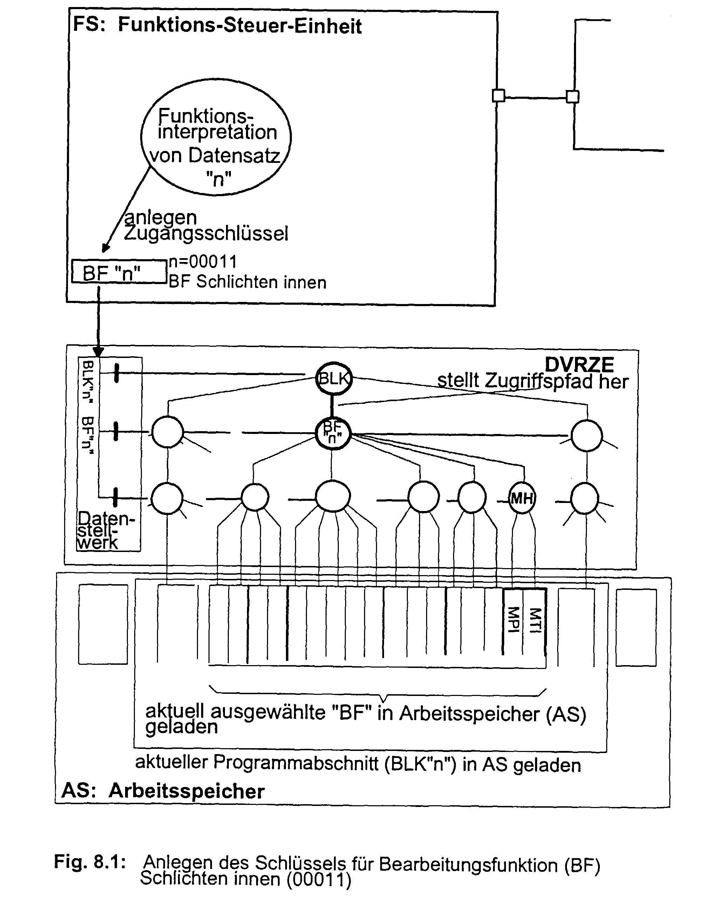

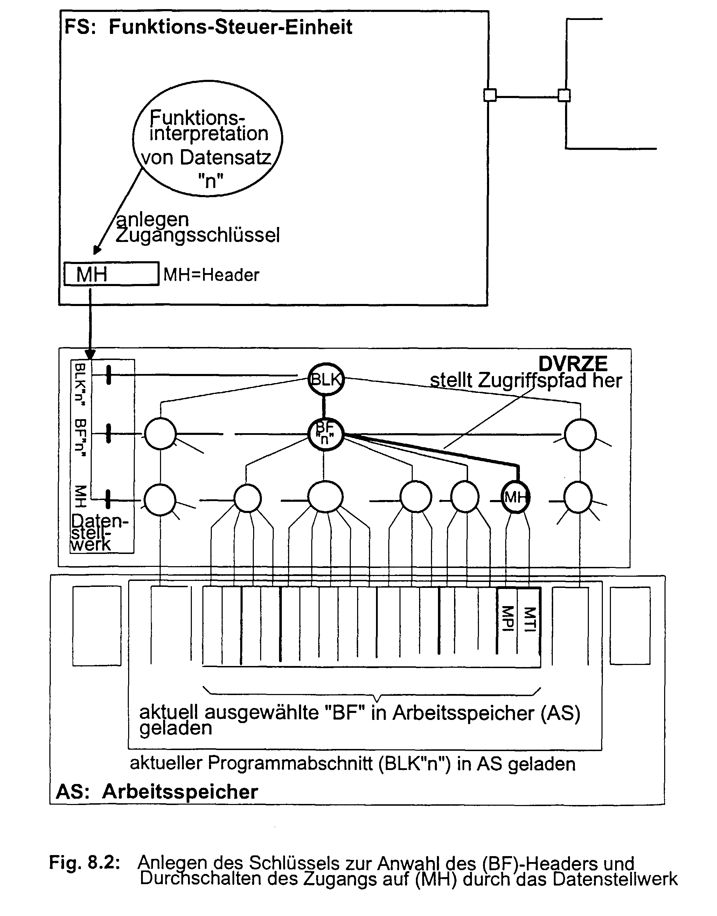

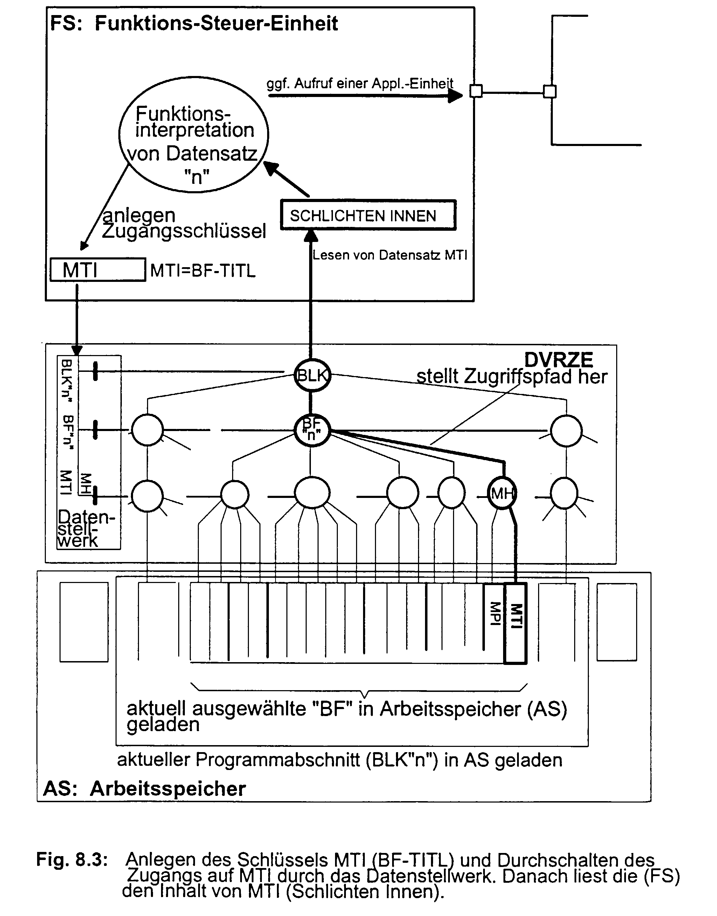

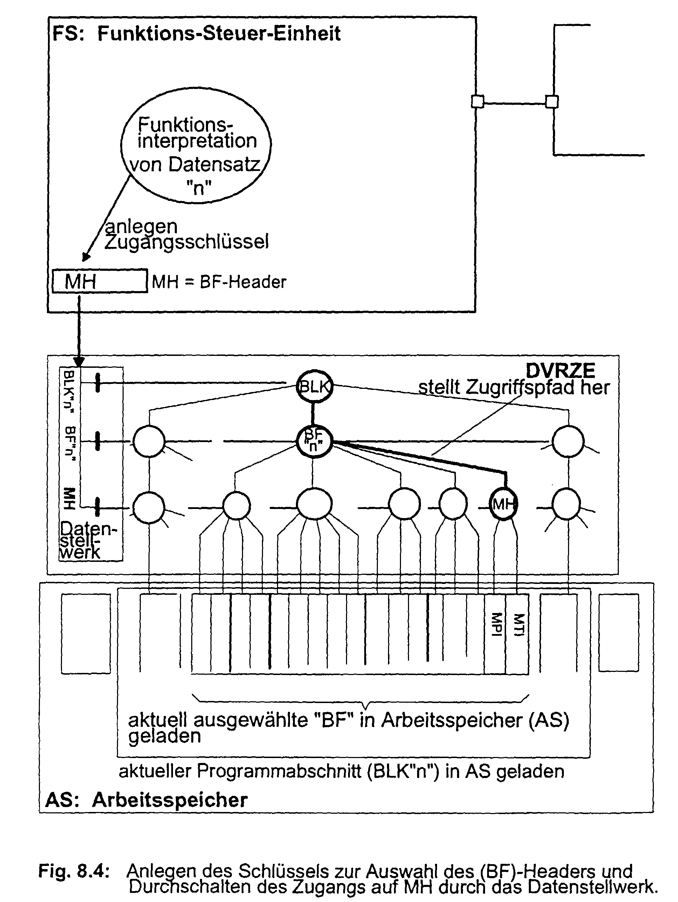

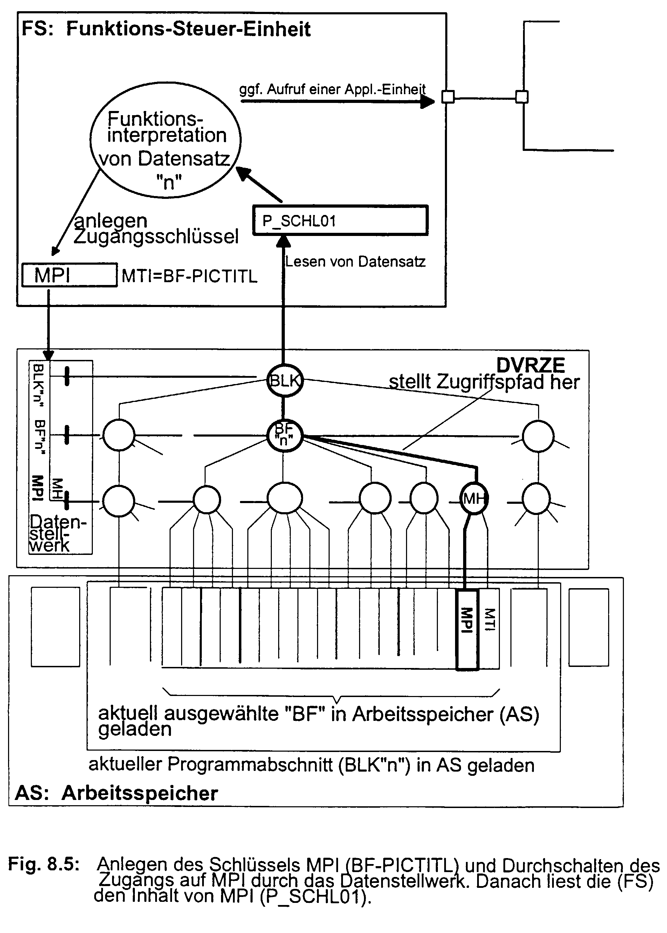

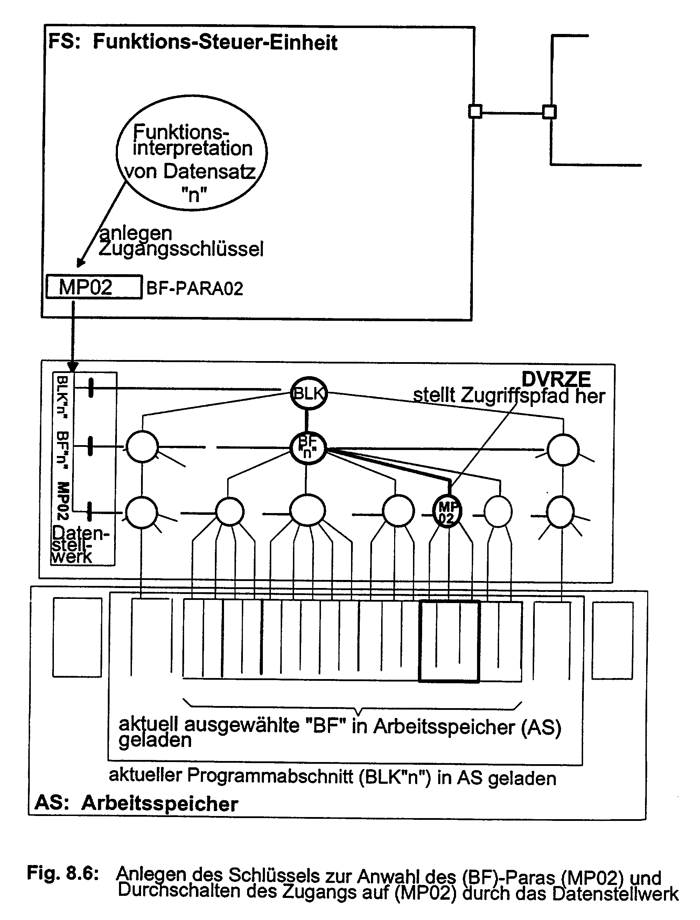

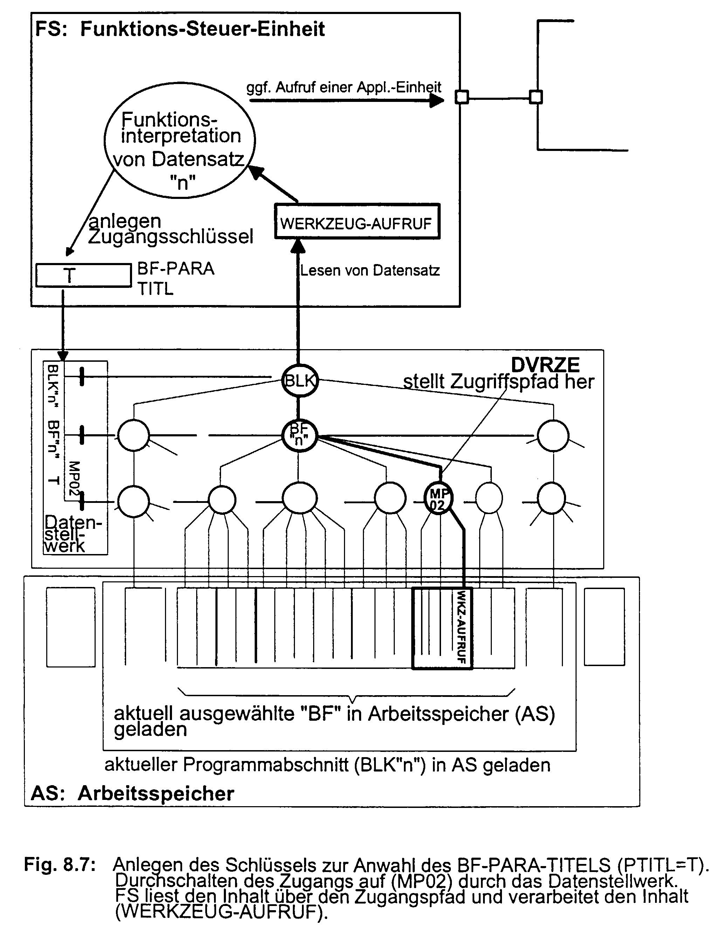

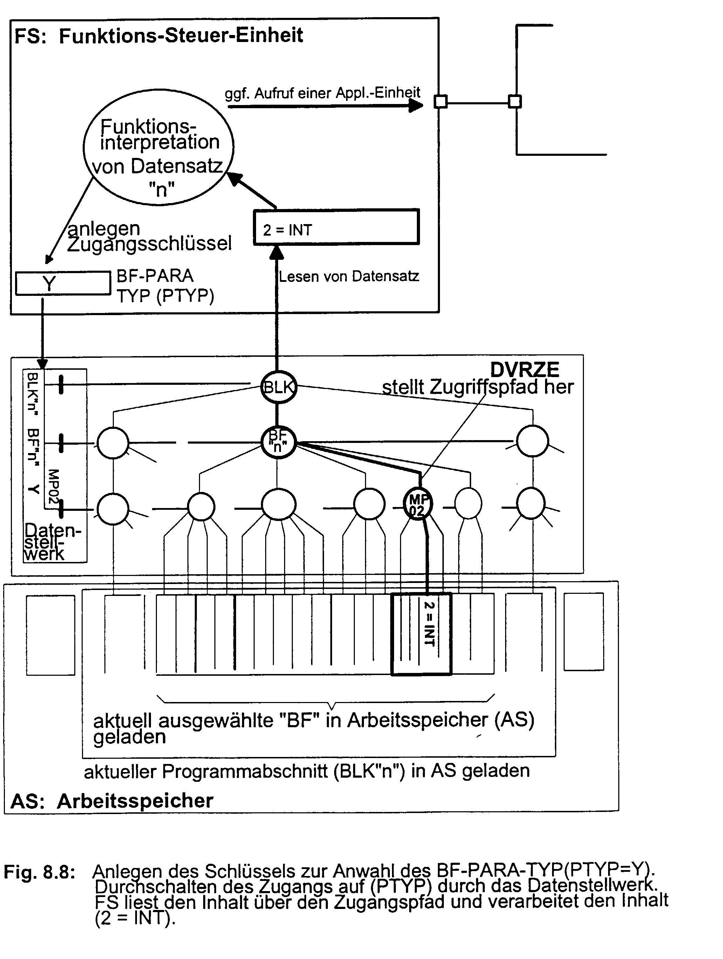

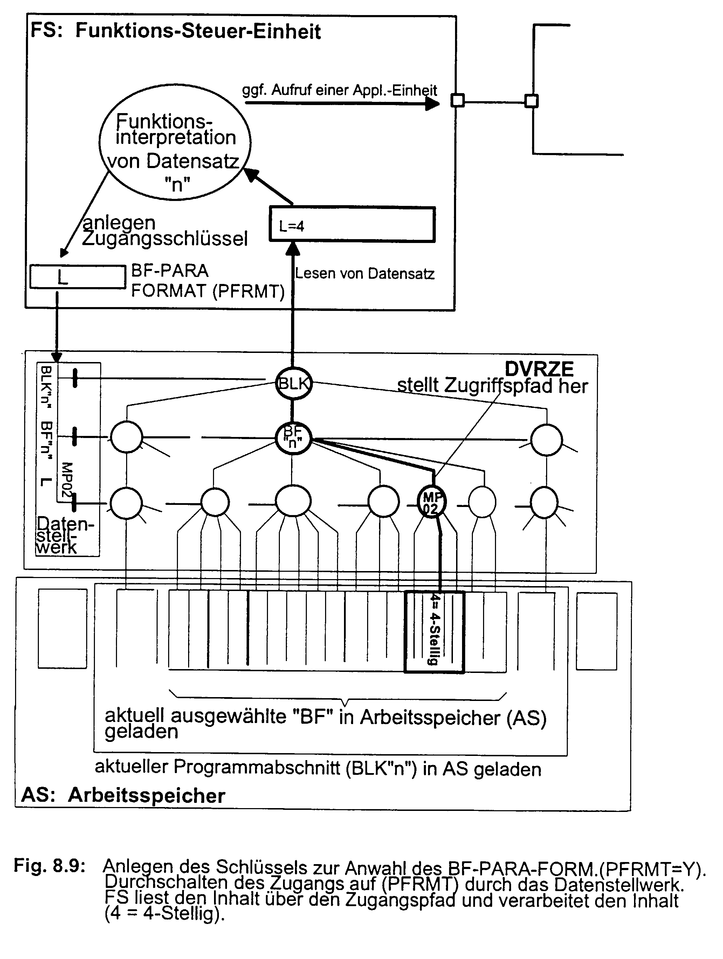

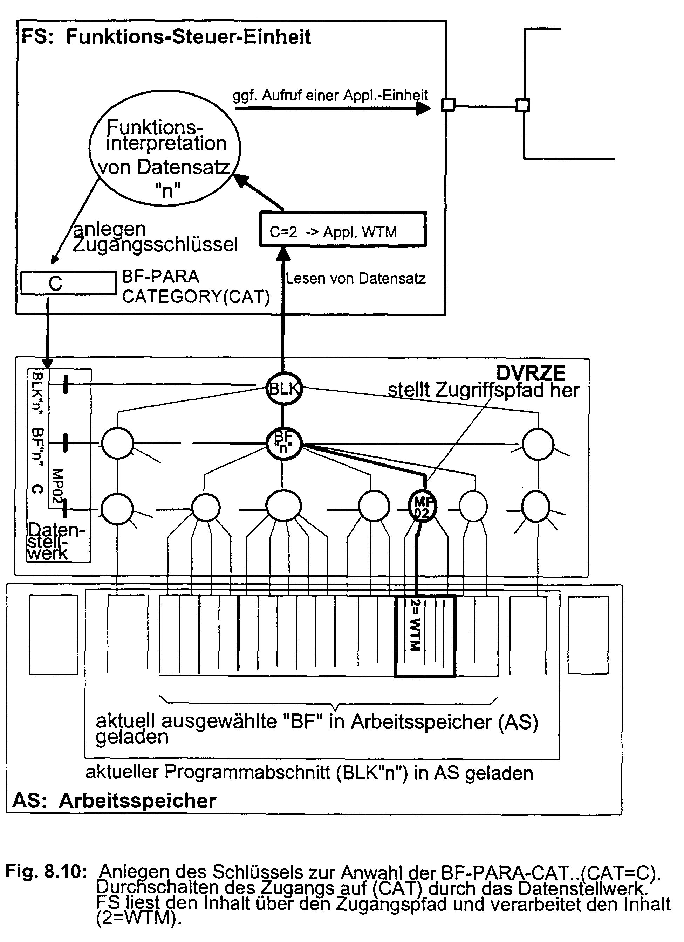

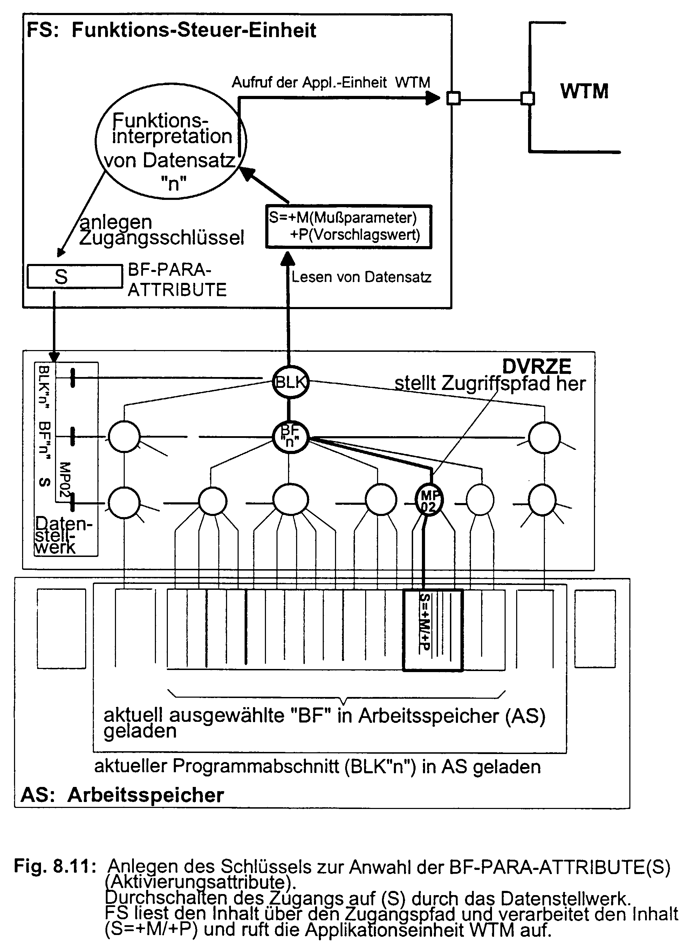

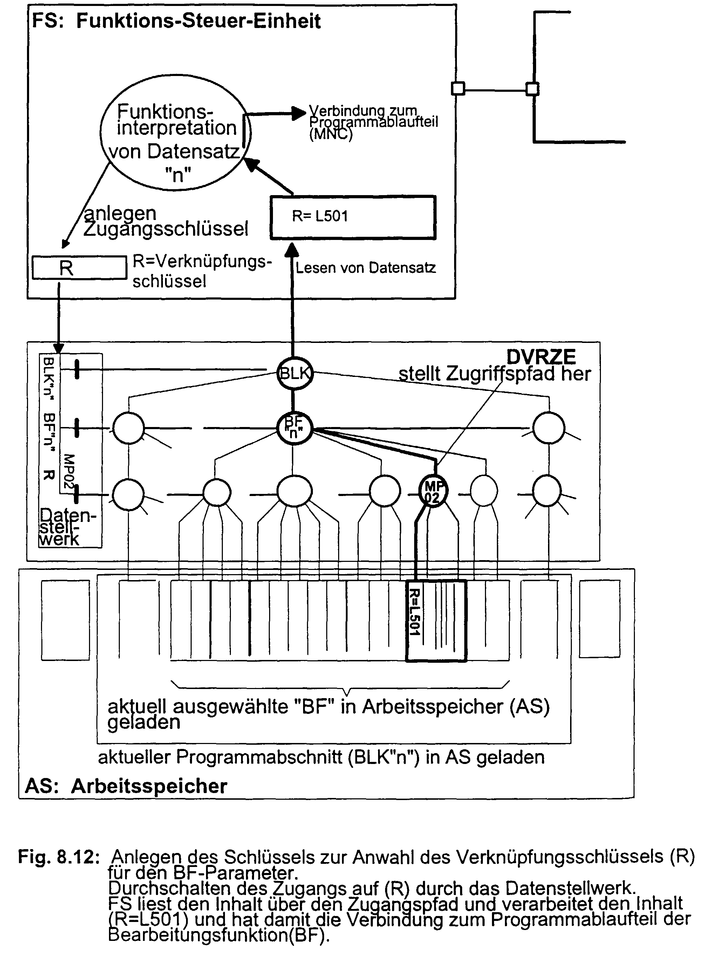

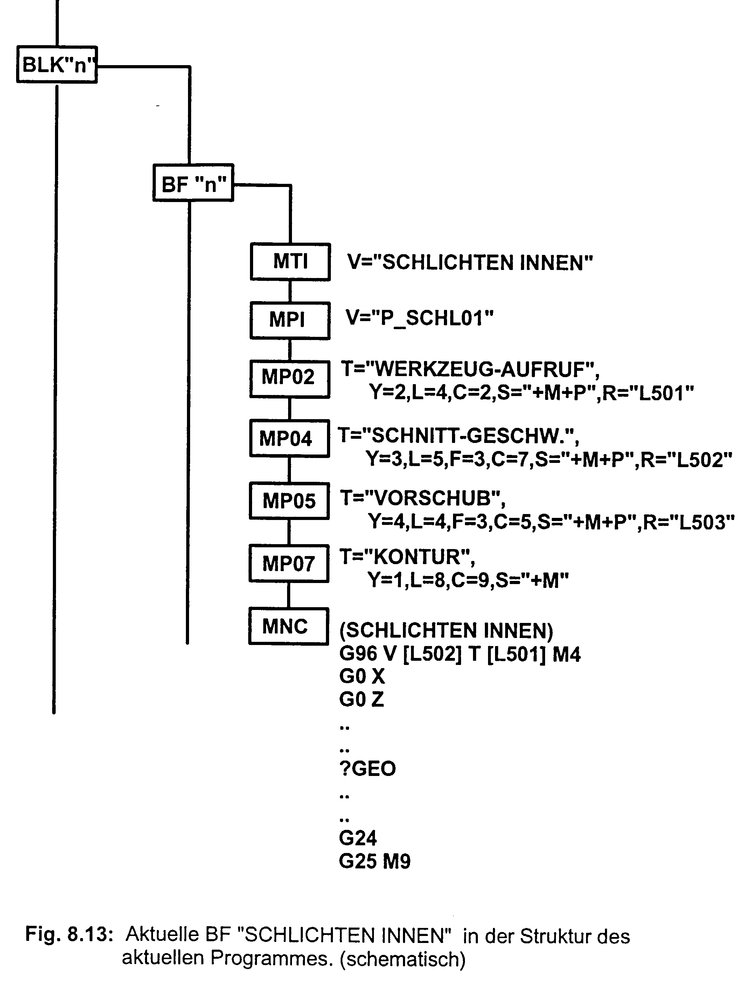

Wird von einer Funktionseinheit ein Datenzugriff benötigt, so legt diese Funktionseinheit den Schlüssel für den gewünschten Datensatz an. Die Daten-Vorwärts-Rückwärts-Zugriffs-Einheit (DVRZE) ermittelt über diesen Zugangsschlüssel den entsprechenden Datensatz und stellt über das Datenstellwerk (DSW) den Zugang her (Fig.8).

Durch die erfindungsgemäße Ausprägung der Funktionsbeschreibungseinheit (FB) und der Funktionssteuereinheit (FS) sowie durch die erfindungsgemäße Anordnung und Funktion der Daten-Vorwärts-Rückwärts-Zugriffs-Einheit (DVRZE) wird eine Trennung der Funktionsbeschreibungseinheit und der Funktionssteuereinheit erreicht, wodurch die Beschreibung von Bearbeitungsfunktionen (BF) in der Funktionsbeschreibungseinheit (FB) ohne Rückwirkung auf andere Funktionseinheiten (z.B. auf die Funktionssteuereinheit) ermöglicht wird.

Der Anwender ist also völlig frei in der Beschreibung von Dialog- und Ablaufteil seiner Bearbeitungsfunktionen und somit bei der Festlegung oder Erweiterung des funktionalen Umfangs des Programmiersystemes.

Ein im Programmiersystem erstelltes Programm wird von der Daten-Vorwärts-Rückwärts-Zugriffs-Einheit (DVRZE) sofort nach der Eingabe einer jeden Bearbeitungsfunktion in die Teildaten Maschinensteuerdaten und Dialogsteuerdaten aufgetrennt.

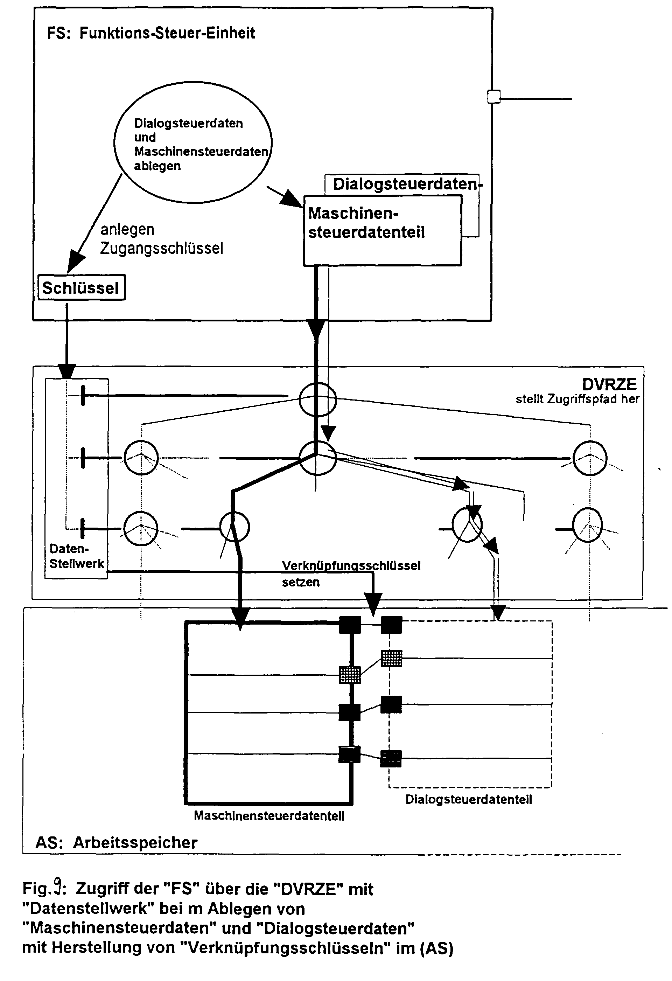

Die Daten-Vorwärts-Rückwärts-Zugriffs-Einheit (DVRZE) setzt zu diesem Zweck "Verknüpfungsschlüssel" an den relevanten Stellen des Maschinensteuerdatenteils und dem Dialogdatenteil ein. Durch diese Verknüpfungsschlüssel wird eine eindeutige Verbindung hergestellt (Fig.9).

Man erkennt, daß durch diese Funktionsausprägung der Daten-Vorwärts-Rückwärts-Zugriffs-Einheit (DVRZE) Dialogsteuerdaten und Maschinensteuerdaten (Maschinensteuerprogramm im G-Code) zu jedem Zeitpunkt des Programmiervorganges vorliegen. Es ist somit möglich, daß Eingaben zur Programmerstellung oder zur Programmänderung jederzeit beliebig in den Ebenen "Dialoggeführt", "graphisch interaktiv" oder direkt im Maschinensteuerdatenteil (im G-Code) durchgeführt werden können.

Selbst manuell im Maschinensteuerdatenteil im G-Code eingegebene Programmabschnitte können von der "Applikationseinheit" GEO gelesen graphisch dargestellt und graphisch interaktiv weiterverarbeitet werden.

Vom Anwender müssen dazu die Zugriffsschlüssel für Start und Ende des Programmabschnitts im Maschinensteuerdatenteil eingegeben werden.

Der Zugriff für die Applikationseinheit (GEO) oder auf ander Applikationseinheiten wird dann von der Daten-Vorwärts-Rückwärts-Zugriffs-Einheit (DVRZE) über diese Zugriffsschlüssel hergestellt.

Für die Steuerung der Maschine trennt nach Abschluß des Programmiervorganges die Daten-Vorwärts-Rückwärts-Zugriffs-Einheit (DVRZE) die Verbindungen über die Verknüpfungsschlüssel auf. Die Verknüpfungspunkte bleiben dabei sowohl beim Maschinensteuerdatenteil als auch beim Dialogdatenteil durch die Verknüpfungsschlüssel eindeutig erhalten. Der Maschinensteuerdatenteil wird als Maschinenprogramm in den Speicher der Maschinensteuerung geladen und wird von der Steuerung abgearbeitet.

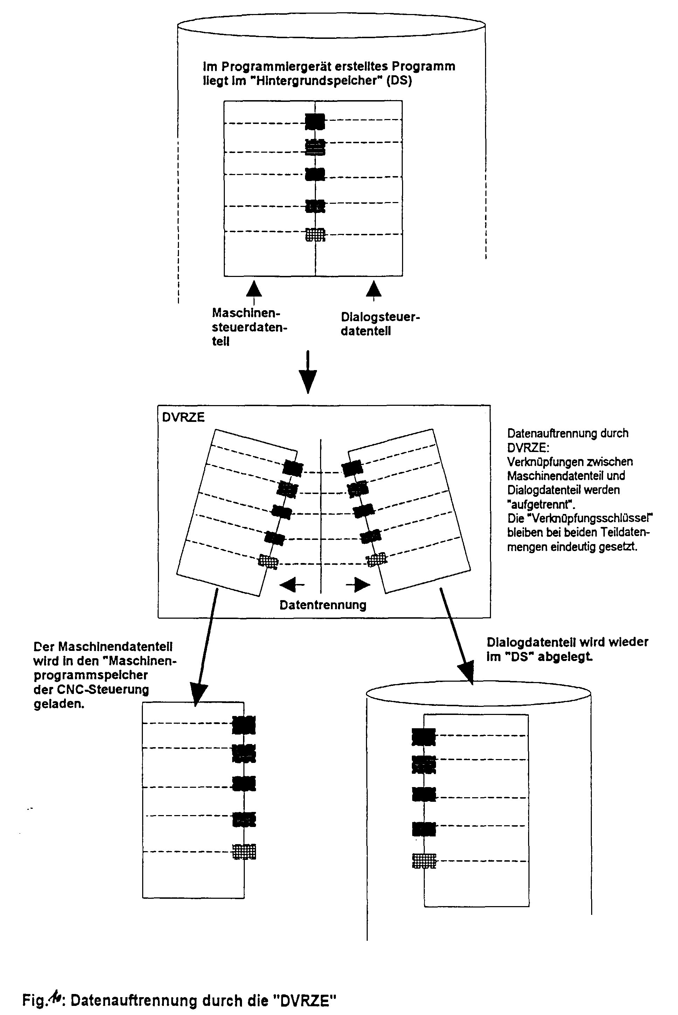

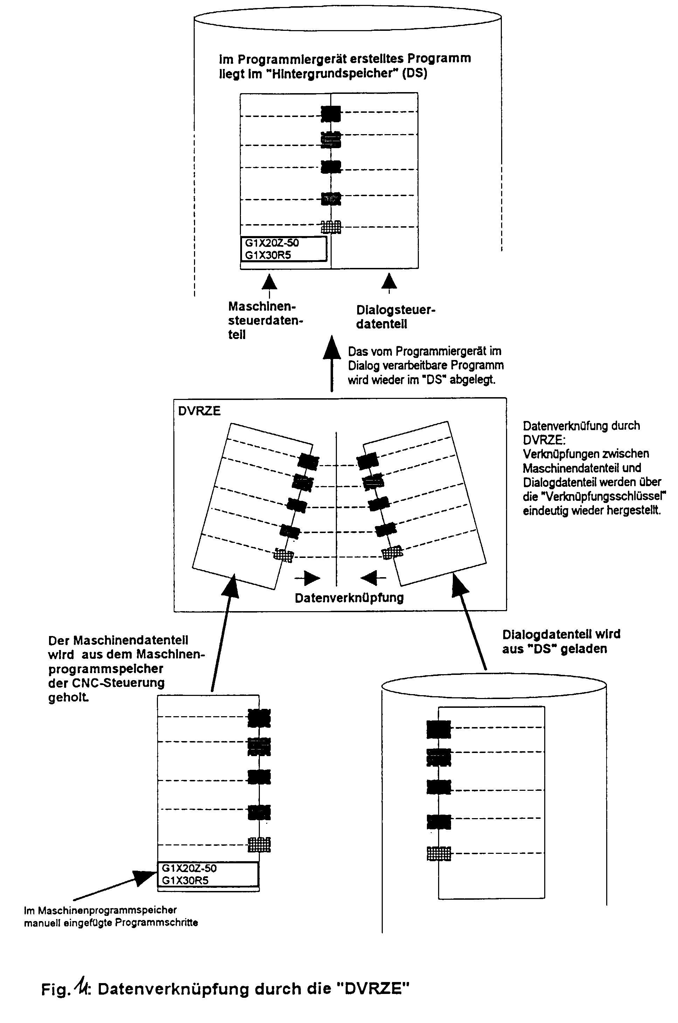

Man erkennt, daß durch diese Lösung die Notwendigkeit eines Übersetzungslaufes und die damit verbundenen Datenreduktion zur Erzeugung des Maschinenprogrammes entfällt (Fig.10). Betrachtet man das durch die Auftrennung entstandene Maschinenprogramm, so wird klar, daß Änderungen in diesem Maschinenprogramm eindeutig in das Programmiersystem zurückgeführt werden können und dort im Dialog zur Verfügung stehen (siehe Fig.ll). Die Daten-Vorwärts-Rückwärts-Zugriffs-Einheit (DVRZE) stellt die eindeutige Verbindung zum Dialogdatenteil über die Verknüpfungsschlüssel bei der Rückübertragung des Maschinendatenteils ins Programmiersystem wieder her.

Erläuterung der Funktionsweise der Funktionsbeschreibungseinheit an einem Beispiel für die Beschreibung einer Bearbeitungsfunktion (BF).

Zur Festlegung der funktionellen Möglichkeiten des Programmiersystemes ist erfindungsgemäß die sogenannte Funktionsbeschreibungseinheit angeordnet. Mit dieser Funktionsbeschreibungseinheit (FB) werden Bearbeitungsfunktionen (BF) bezüglich Eingabedialog und bezüglich des gewünschten Maschinenablaufes, welcher bei der Verwendung der Bearbeitungsfunktion (BF) während der Programmerstellung für die Steuerung des Bearbeitungsprozesses zur Anwendung kommen soll, beschrieben.

Solche Bearbeitungsfunktionen sind zum Beispiel
SCHLICHTEN AUSSEN
BOHRMUSTER AUSSERMITTIG
SECHSKANT FRÄSEN
SCHRUPPEN INNEN

Diese können mit der Funktionsbeschreibungseinheit frei vom Anwender erstellt werden, und stehen dann für der späteren Programmerstellungsvorgang, bei dem der Bearbeitungsprozeß zur Fertigung eines Werkstückes programmiert wird, im Programmiersystem zur Verfügung.

Die Bearbeitungsfunktionen werden einmal entsprechend den speziellen Anforderungen beim Anwender erstellt und können später beliebig oft und in beliebiger Kombination für die Erstellung von Programmen verwendet werden.

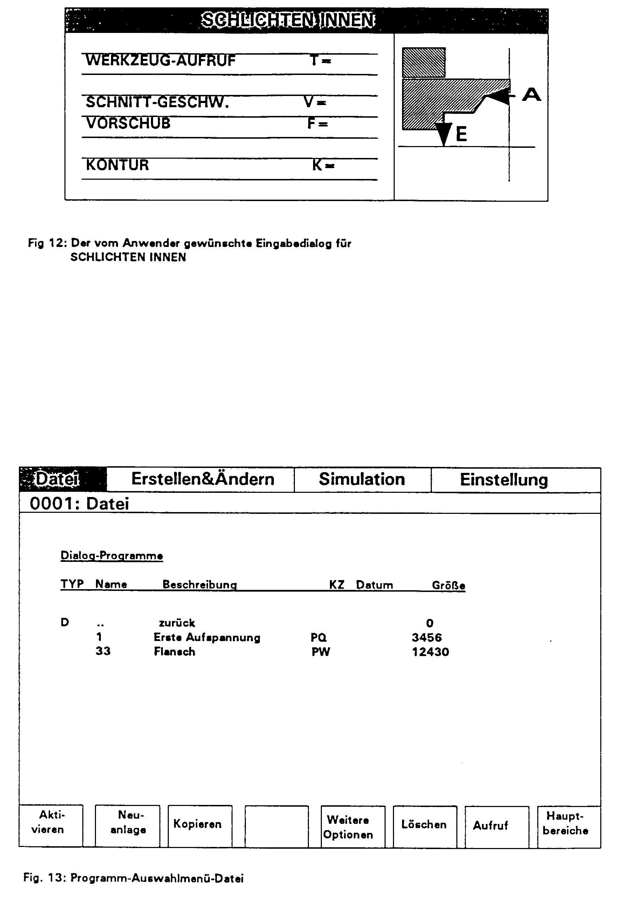

Das Programmiersystem ist somit im Funktionsumfang beliebig vom Anwender erweiterbar und anpaßbar. Zur Erläuterung der Funktionsweise der Funktionsbeschreibungseinheit (FB) ist im folgenden die Erstellung der Bearbeitungsfunktion (BF) mit dem Titel "SCHLICHTEN INNEN" beschrieben. Der vom Anwender gewünschte Eingabedialog ist in Fig.12 dargestellt.

Funktionsablauf:
1 - Auswahl der Funktion Neuanlage in der Funktionsbeschreibungseinheit (FB).
2 - Die Funktionsbeschreibungseinheit (FB) fordert vom Anwender (A) die Eingabe von Verwaltungsinformationen an ( z.B. Erstellungsdatum, Name der Erstellers ...).
3 - Der Anwender (A) gibt diese Informationen ein und bestätigt die Eingaben mit der INPUT-Taste.
4 - Die Funktionsbeschreibungseinheit (FB) fordert die Eingabe des Funktionstitels an.
5 - Der Anwender (A) gibt den Titel "SCHLICHTEN INNEN" ein und bestätigt mit der INPUT-Taste.
6 - Die Funktionsbeschreibungseinheit (FB) legt den Datensatz ab und aktiviert die Zugangsmöglichkeit über den Schlüssel (BFTITL). Damit hat die Funktionssteuereinheit (FS) später über die Daten-Vorwärts-Rückwärts-Zugriffs-Einheit (DVRZE) Zugang auf diesen Datensatz durch Anlegen des Schlüssels (BFTITL) an die Daten-Vorwärts-Rückwärts-Zugriffs-Einheit (DVRZE).
7 - Die Funktionsbeschreibungseinheit (FB) fordert die Eingabe für den Pictogrammtitel an.
8 - Der Anwender (A) gibt den Pictogrammtitel ein und bestätigt die Eingabe mit der INPUT-Taste.
9 - Die Funktionsbeschreibungseinheit (FB) legt den Datensatz Pictogrammtitel ab und aktiviert die Zugangsmöglichkeit über den Schlüssel PICTITL.
10- Die Funktionsbeschreibungseinheit (FB) fordert die Eingabe der Position (POS), den Titel des 1. Parameters (PTITL), den TYP (PTYP) und das Format (PFRMT) an.
11- Der Anwender (A) gibt für POS = 2 und den PTITL "WERKZEUG-AUFRUF", für TYP INT (Festkomma), für das Format 4 (4 stellig) ein und bestätigt die Eingabe durch die Taste INPUT.
12- Die Funktionsbeschreibungseinheit (FB) legt den Datensatz ab und aktiviert den Zugang über die Schlüssel BFPARA, PTITL, PTYP und PFRMT.
13- Die Funktionsbeschreibungseinheit (FB) startet die Aktivierungseinheit, diese legt die möglichen Applikationsfunktionen zur Auswahl vor.
14- Der Anwender (A) wählt die Appl.-Fkt. WTM (Werkzeugverwaltung) und bestätigt durch die Taste INPUT.
15- Die Funktionsbeschreibungseinheit (FB) aktiviert den Zugang auf die Funktionskategorie (CAT) und die Aktivierungseinheit (Ä) aktiviert die Applikationsfunktion WTM.
16- Die Funktionsbeschreibungseinheit (FB) fordert die Eingabe der Position (POS), den Titel des 2. Parameters (PTITL), den TYP (PTYP) und das Format (PFRMT) an.
17- Der Anwender (A) gibt für POS = 4 und für den Titel des 2. Parameters (PTITL) "SCHNITT-GESCHW.", für TYP GLK (Gleitkomma), für das Format 4.3 (4-Vorkomma-, 3-Nachkommastellen) ein und bestätigt die Eingabe durch die Taste INPUT.
18- Die Funktionsbeschreibungseinheit (FB) legt den Datensatz ab und aktiviert den Zugang über die Schlüssel BFPARA, PTITL, PTYP und PFRMT.
19- Die Funktionsbeschreibungseinheit (FB) startet die Aktivierungseinheit (Ä), diese legt die möglichen Applikationsfunktionen zur Auswahl vor.
20- Der Anwender (A) wählt die Applikationsfunktion TTMSCHNITT (Technologie-Tabellen-Modul) und bestätigt die Auswahl durch die Taste INPUT.
21- Die Funktionsbeschreibungseinheit (FB) aktiviert den Zugang auf die Funktionskategorie (CAT) und die Aktivierungseinheit (Ä) aktiviert die Applikationsfunktion TTM.
22- Die Funktionsbeschreibungseinheit (FB) fordert die Eingabe der Position (POS), den Titel des 3. Parameters (PTITL), den TYP (PTYP) und das Format (PFRMT) an.
23- Der Anwender (A) gibt für POS = 5 und den Titel des 3. Parameters (PTITL) "VORSCHUB", für TYP GLK (Gleitkomma), für das Format 4.3 (4Vorkomma, 3Nachkomma) ein und bestätigt die Eingabe durch die Taste INPUT.
24- Die Funktionsbeschreibungseinheit (FB) legt den Datensatz ab und aktiviert den Zugang über die Schlüssel BFPARA, PTITL, PTYP und PFRMT.
25- Die Funktionsbeschreibungseinheit (FB) startet die Aktivierungseinheit (Ä), diese legt die möglichen Applikationsfunktionen zur Auswahl vor.
26- Der Anwender (A) wählt die Applikationsfunktion TTMVORS (Technologie-Tabellen-Modul) und bestätigt die Auswahl durch die Taste INPUT.
27- Die Funktionsbeschreibungseinheit (FB) aktiviert den Zugang auf die Funktionskategorie (CAT) und die Aktivierungseinheit (Ä) aktiviert die Applikationsfunktion TTM.
28- Die Funktionsbeschreibungseinheit (FB) fordert die Eingabe der Position (POS), den Titel des 4. Parameters (PTITL), den TYP (PTYP) und das Format (PFRMT) an.
29- Der Anwender (A) gibt für POS = 7 und den PTITL "KONTUR", für TYP TXT (Texteingabe), für das Format 8 (8-stellig) ein und bestätigt die Eingabe durch die Taste (INPUT).
30- Die Funktionsbeschreibungseinheit (FB) legt den Datensatz ab und aktiviert den Zugang über die Schlüssel BFPARA, PTITL, PTYP und PFRMT.
31- Die Funktionsbeschreibungseinheit (FB) startet die Aktivierungseinheit, diese legt die möglichen Applikationsfunktionen zur Auswahl vor.
32- Der Anwender (A) wählt die Appl.-Fkt. GEO_KONT (Geometrieeditor) und bestätigt die Auswahl durch die Taste INPUT.
33- Die Funktionsbeschreibungseinheit (FB) aktiviert den Zugang auf die Funktionskategorie (CAT) und die Aktivierungseinheit (Ä) aktiviert die Applikationsfunktion GEO. Damit wird bei Drücken der Taste "Aufruf" auf diesem Parameter bei der Programmierung der Geometrieeditor durch die Funktionssteuereinheit gestartet und dem Anwender der Eingabedialog zur graphisch interaktiven Beschreibung der Schlichtkontur angeboten.
34- Die Funktionsbeschreibungseinheit (FB) fordert die Eingabe des gewünschten Programmablaufes (ABLAUF) an.
35- Der Anwender (A) gibt den Programmablauf mit dem Applikationsknoten für (GEO) ein und bestätigt die Eingabe durch die Taste INPUT.
36- Die Funktionsbeschreibungseinheit (FB) legt den Datensatz für den Programmablauf ab und aktiviert den Zugang über den Schlüssel NC und den Zugang auf den Applikationsknoten GEO mit Schlüssel GEO-K. Die Applikationseinheit legt die Bearbeitungskontur über den Zugangsschlüssel GEO-K ab.

Mit diesem Schritt ist die gewünschte Bearbeitungsfunktion fertiggestellt. Der Anwender verläßt die Funktionsbeschreibungseinheit.

Nachstehend wird die Funktionsweise der Funktionssteuereinheit in Verbindung mit der Daten-Vorwärts-Rückwärts-Zugriffs-Einheit (DVRZE) und den Applikationseinheiten WTM, TTM und GEO erläutert (siehe Fig.13 ff).

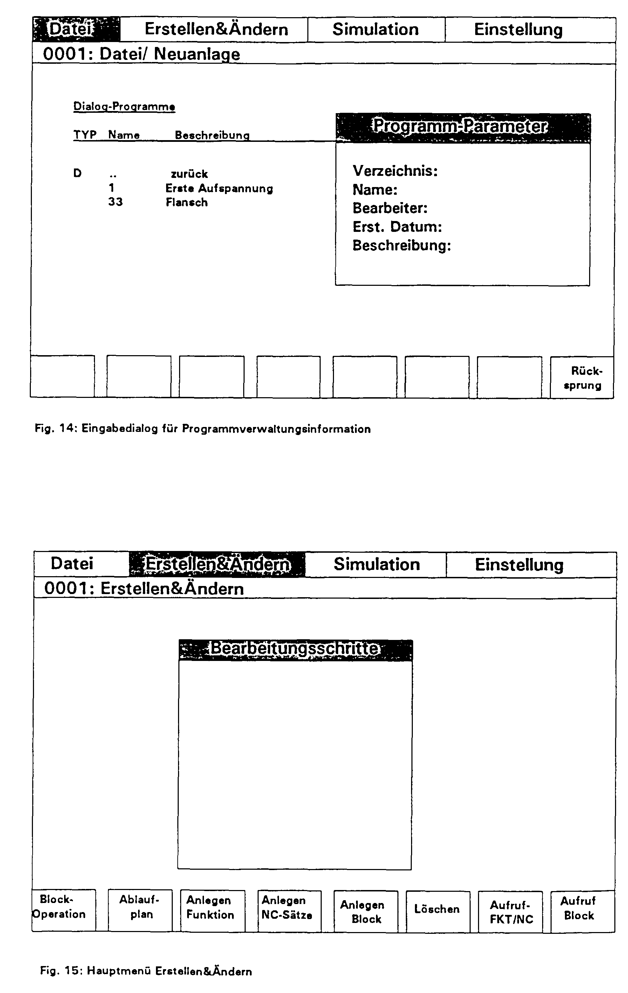

Beim Erstellen eines Programmes für den Bearbeitungsprozeß zur Erzeugung eines Werkstückes werden dem Anwender alle zu irgend einem früheren Zeitpunkt in der Funktionsbeschreibungseinheit (FB) definierten Bearbeitungsfunktionen (BF) zur Auswahl vorgelegt. Der Anwender selektiert nacheinander die für den Bearbeitungsprozeß benötigten Bearbeitungsfunktionen (BF) in der für den Bearbeitungsprozeß benötigten Reihenfolge und gibt über den Eingabedialog, der entsprechend den Bearbeitungsfunktionen (BF) von der Funktionssteuereinheit angeboten wird, die noch geforderten Daten ein (siehe Fig.15-18). Als Ergebnis erhält er z.B. das folgende Bearbeitungsprogramm:
PLANDREHEN
SCHRUPPEN AUSSEN
BOHREN
SCHRUPPEN INNEN
SCHLICHTEN INNEN
GEWINDE STREHLEN

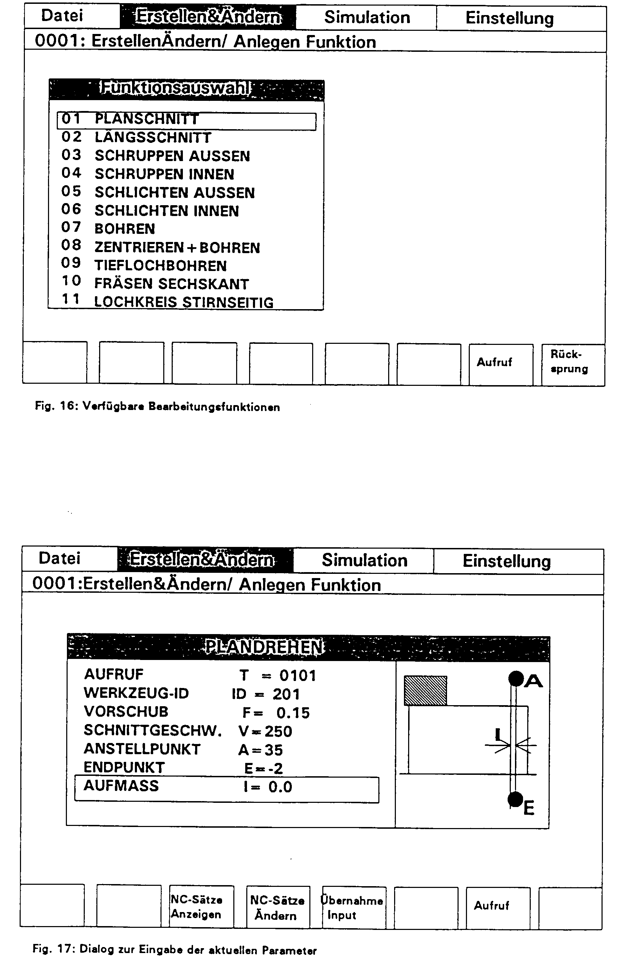

Die genaue Funktionsweise der Funktionssteuereinheit (FS) in Verbindung mit der Daten-Vorwärts-Rückwärts-Zugriffs-Einheit (DVRZE) und den Applikationseinheiten WTM, TTM und GEO wird am Beispiel für die Auswahl der Bearbeitungsfunktionen für ein aktuelles Programmierbeispiel erläutert.
1- Der Anwender (A) startet das Programmiersystem und erhält das Programmauswahlmenü "Datei" vorgelegt (Fig.13).
2- Der Anwender (A) erhält nach Drücken der Funktionstaste "Neuanlage" den Eingabedialog zur Festlegung der Programmverwaltungsinformationen vorgelegt (Fig.14).
3- Der Anwender (A) gibt "Programmnummer", sowie ggf. "Bearbeiterkurzzeichen", "Erstellungsdatum" und "Kurzbeschreibung" für das zu erstellende Programm ein.
4- Der Anwender (A) bestätigt die Eingaben mit "Input". Die Funktionssteuereinheit (FS) legt dann das Hauptmenü "Erstellen & Ändern" zur Festlegung des Programmablaufes vor (Fig.15).
5- Der Anwender (A) erhält bei Drücken der Funktionstaste "Anfügen Funktion" alle in der Funktionsbeschreibungseinheit einmal festgelegten Bearbeitungsfunktionen (BF) zur Auswahl vorgelegt (Fig.16).
6- Der Anwender (A) wählt die zum aktuellen Programm benötigten Bearbeitungsfunktionen (BF) in der benötigten Reihenfolge aus und gibt bei den durch die zur Bearbeitungsfunktionen (BF) gehörenden Dialoge, welche von der "Funktionssteuereinheit" vorgelegt werden, die zum aktuellen Programm benötigten Informationen und Parameter ein (siehe Fig.17).

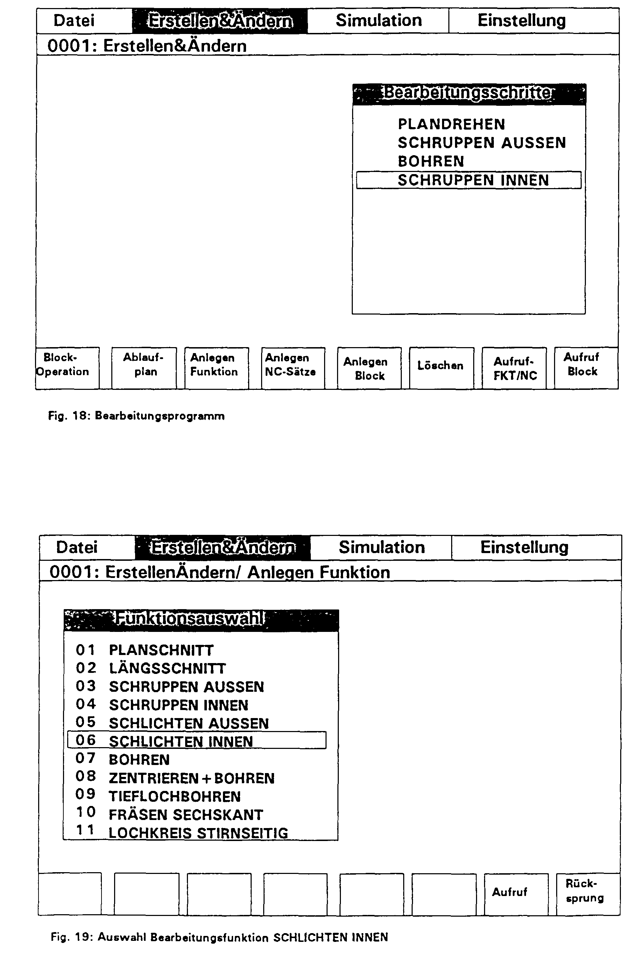

Nachstehend wird der Ablauf bei Auswahl und Parametrisierung der (BF) "SCHLICHTEN INNEN" erläutert.
7- Nach der Auswahl der Bearbeitungsfunktion (BF) "SCHLICHTEN INNEN" (Fig.19) mit Taste "Input" wird die Bearbeitungsfunktion von der Daten-Vorwärts-Rückwärts-Zugriffs-Einheit (DVRZE) eingelesen. Die mit der Funktionsbeschreibungeinheit in verschlüsselter Form erstellte Bearbeitungsfunktion wird dabei über die entsprechenden Schlüssel in Dialogsteuerdatenteil und in den wertfreien Maschinensteuerdatenteil aufgetrennt und für die Funktionssteuereinheit im Arbeitsspeicher des Programmiersystemes zur Verfügung gestellt.
8- Die Dialogsteuerdaten werden jetzt von der Funktionssteuereinheit (FS) Schritt für Schritt interpretiert (abgearbeitet). Der Zugriff auf die Daten erfolgt dabei wiederum über die Daten-Vorwärts-Rückwärts-Zugriffs-Einheit (DVRZE). Diese stellt den Zugang auf die einzelnen Datensätze über die von der Funktionssteuereinheit (FS) nacheinander angelegten Schüssel her. Die Daten-Vorwärts-Rückwärts-Zugriffs-Einheit (DVRZE) stellt entsprechend der angelegten Schlüssel sogenannte Datenweichen so, daß die Funktionssteuereinheit über den so hergestellten Datenpfad direkten Zugriff auf den mit dem jeweiligen Schlüssel ausgewählten Datensatz erhält. Die Funktionssteuereinheit benötigt dabei keine Kenntnis über Ort und Reihenfolge der angesprochenen Datensätze, da die Daten-Vorwärts-Rückwärts-Zugriffs-Einheit (DVRZE) entsprechend einem Datenstellwerk auf einem Datenrangierbahnhof die Zugangsweichen stellt und den Zugriff herstellt. Durch diese erfindungsgemäße Anordnung und Ausprägung der Daten-Vorwärts-Rückwärts-Zugriffs-Einheit (DVRZE) ist es möglich, daß Bearbeitungsfunktionen (BF) vom Anwender mit der Funktionsbeschreibungseinheit (FB) bezüglich des Aufbaus des Eingabedialoges und des gewünschten Maschinenablaufes, beliebig frei nach seinen Anforderungen festgelegt werden können. Der Anwender hat dadurch keine Einschränkungen bezüglich Aussehen, Funktion, Typ und Position eines Eingabeparameters in dem zu seiner Bearbeitungsfunktion (BF) gehörenden Eingabedialog.

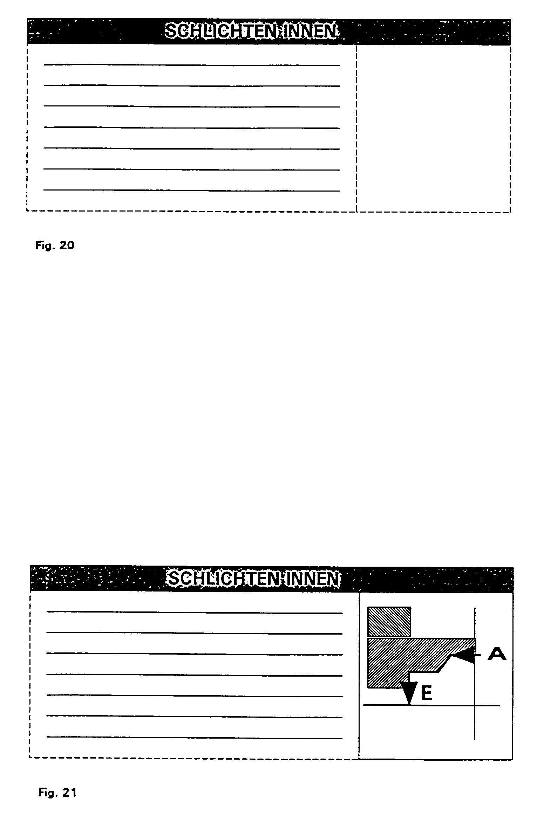

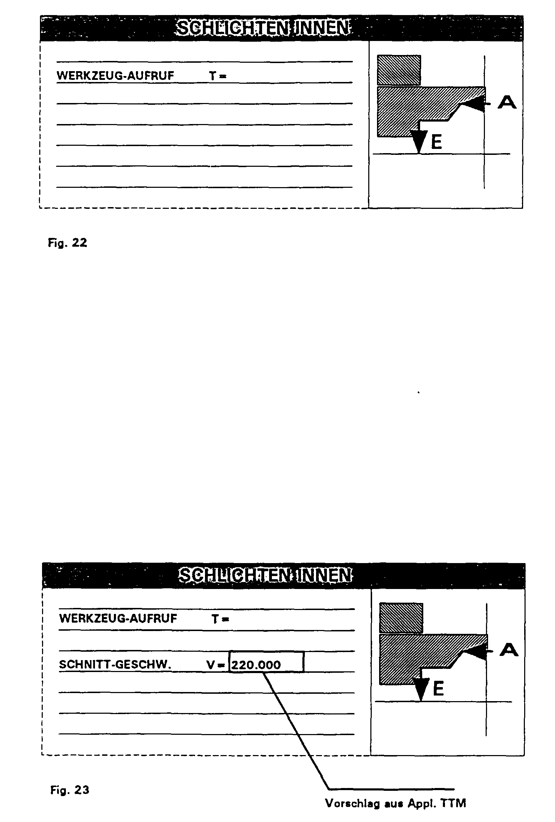

Interpretationsvorgang der Funktionssteuereinheit (FS)
9- Nach Auswahl der Bearbeitungsfunktion (BF) "SCHLICHTEN INNEN" legt die Funktionssteuereinheit (FS) den Schlüssel für den Bearbeitungstitel (BFTITL) an der Daten-Vorwärts-Rückwärts-Zugriffs-Einheit (DVRZE) an. Die Daten-Vorwärts-Rückwärts-Zugriffs-Einheit (DVRZE) stellt den Datenzugang her. Die Funktionssteuereinheit holt über den Datenpfad den Bearbeitungstitel und erstellt das Eingabefenster mit dem Bearbeitungsfunktionstitel "SCHLICHTEN INNEN" (Fig.20).
10- Die Funktionssteuereinheit (FS) legt den Schlüssel für das gewünschte Pictogramm (PICTITL) an. Die Daten-Vorwärts-Rückwärts-Zugriffs-Einheit (DVRZE) stellt den Datenzugang auf den Pictogrammtitel her. Die Funktionssteuereinheit holt über den hergestellten Datenpfad die Daten für das Pictogramm und erzeugt dieses im Eingabefenster für die Bearbeitungsfunktion (BF) SCHLICHTEN INNEN. (Fig.21)
11- Die Funktionssteuereinheit (FS) legt jetzt den Schlüssel für einen Eingabeparameter (BFPARA) an. Die Daten-Vorwärts-Rückwärts-Zugriffs-Einheit (DVRZE) stellt durch das Stellwerk den Zugang auf den 1. Parameter her. Die Funktionssteuereinheit (FS) legt jetzt den Schlüssel für die Positionsinformtion des Parameters im Eingabefenster an. Die Daten-Vorwärts-Rückwärts-Zugriffs-Einheit (DVRZE) stellt durch das Datenstellwerk (DSW) den Zugang auf diesen Datensatz her. Die Funktionssteuereinheit (FS) holt die Positionsinformation 2 (Zeile 2). Die Funktionssteuereinheit (FS) legt den Schlüssel für den Datensatz Parametertitel (PTITL) an. Die Daten-Vorwärts-Rückwärts-Zugriffs-Einheit (DVRZE) stellt den Zugang her. Die Funktionssteuereinheit (FS) holt über die Verbindung den Datensatz für den Parametertitel ("WERKZEUG-AUFRUF"). Die Funktionssteuereinheit (FS) legt nacheinander die Schlüssel für den Zugriff auf die Datensätze Parametertyp (PTYP), Parameterformat (PFRMT) und den Zugangsschlüssel auf die Funktionskategorie (CAT) an und holt die Zugehörigen Datensätze PTYP=INT, PFRMT=4 (4-stellig) und für die Funktionskategorie CAT=WTM und baut den Parameter im Eingabefenster entsprechend dieser Datensätze auf (Fig.22). Die Funktionssteuereinheit (FS) erkennt dann nach Prüfung des Datensatzes CAT, daß die Applikationseinheit WTM (Werkzeugverwaltungsmodul) für diesen Parameter aktiviert ist und startet die Applikationseinheit WTM ggf. dann, wenn der Anwender den Parameter im Eingabefenster angewählt hat und die Funktionstaste "Aufruf" drückt. Er erhält dann den Auswahl- und Eingabedialog für die Applikationeinheit Werkzeugverwaltungsmodul vorgelegt und kann ein für die Bearbeitung geeignetes Werkzeug auswählen.
12- Die Funktionssteuereinheit (FS) legt jetzt den Schlüssel für den nächsten Eingabeparameter (BFPARA) an. Die Daten-Vorwärts-Rückwärts-Zugriffs-Einheit (DVRZE) stellt durch das Stellwerk den Zugang auf den 2. Parameter her. Die Funktionssteuereinheit (FS) legt jetzt den Schlüssel für die Positionsinformtion des Parameters im Eingabefenster an. Die Daten-Vorwärts-Rückwärts-Zugriffs-Einheit (DVRZE) stellt durch das Stellwerk den Zugang auf diesen Datensatz her. Die Funktionssteuereinheit (FS) holt die Positionsinformation 4 (Zeile 4). Die Funktionssteuereinheit (FS) legt den Schlüssel für den Datensatz Parametertitel (PTITL) an. Die Daten-Vorwärts-Rückwärts-Zugriffs-Einheit (DVRZE) stellt den Zugang her.

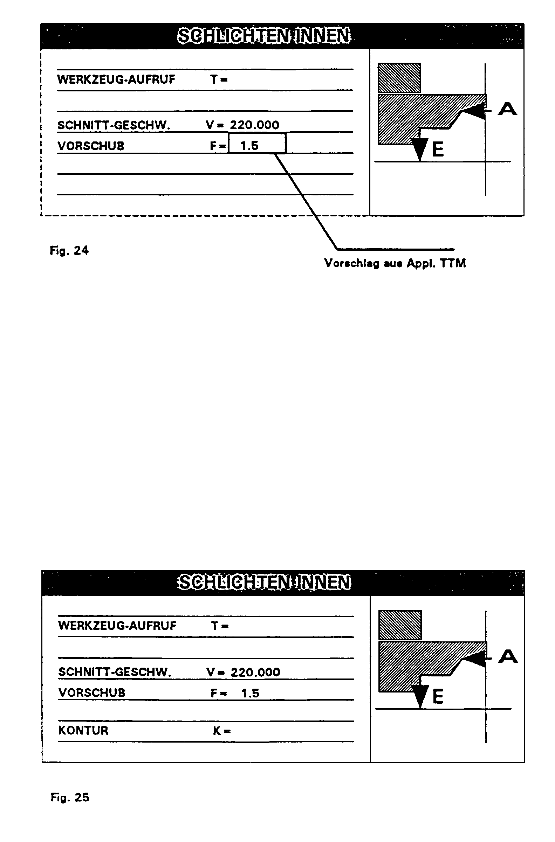

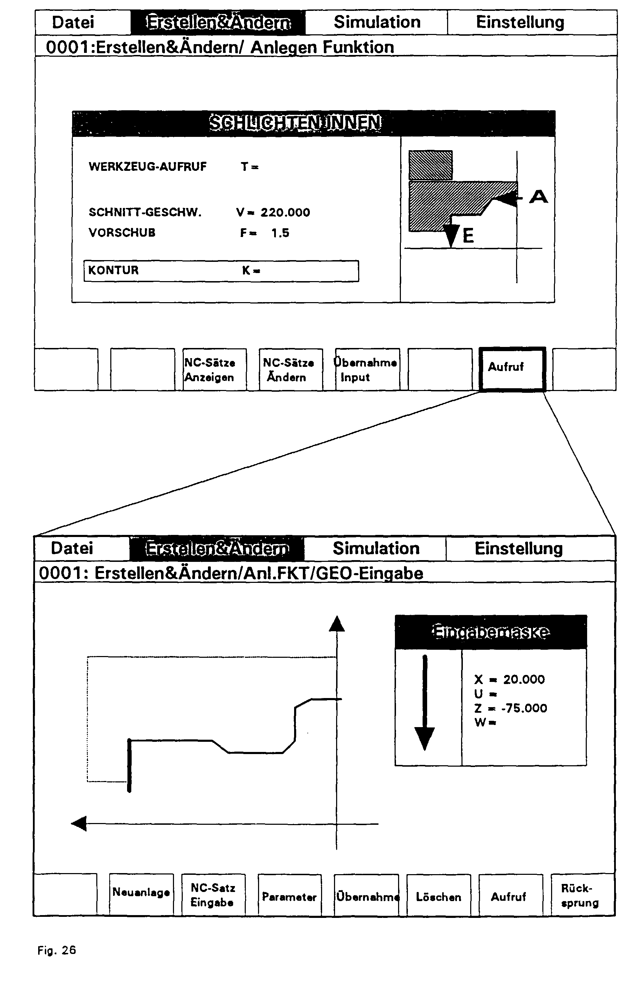

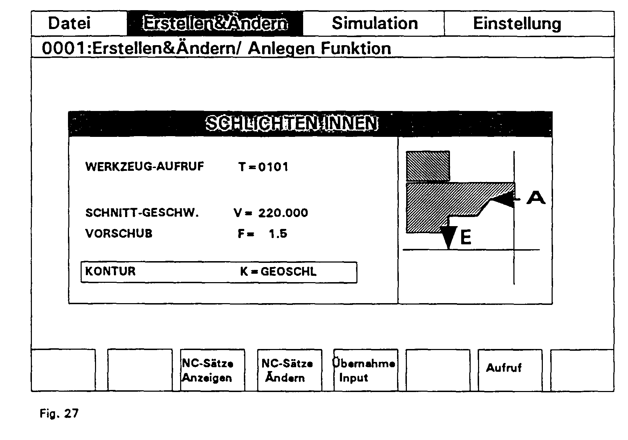

Die Funktionssteuereinheit (FS) holt über die Verbindung den Datensatz für den Parametertitel ("SCHNITT-GESCHW."). Die Funktionssteuereinheit (FS) legt nacheinander die Schlüssel für den Zugriff auf die Datensätze Parametertyp (PTYP), Parameterformat (PFRMT) und den Zugangsschlüssel auf die Funktionskategorie (CAT) an und holt die Zugehörigen Datensätze PTYP=GLK (Gleitkomma), PFRMT=4.3 (4-Vorkomma-, 3-Nachkommastellen) und für die Funktionskategorie CAT=TTM_SCHNITT und baut den Parameter im Eingabefenster entsprechend dieser Datensätze auf. Die Funktionssteuereinheit (FS) erkennt dann nach Prüfung des Datensatzes CAT=TTM_SCHNITT, daß die Applikationseinheit "Technologie-Tabellen-Modul - Schnittgeschwindigkeit (TTM_SCHNITT)" für diesen Parameter aktiviert ist und startet die entsprechende Applikationseinheit. Die Funktionssteuereinheit startet nun die Applikationseinheit TTM, diese ermittelt die Schnittgeschwindigkeit und legt den entsprechenden Wert im Eingabefeld des Parameters als Vorschlag vor (Fig.23).
13-Die Funktionssteuereinheit (FS) legt jetzt den Schlüssel für den nächsten Eingabeparameter (BFPARA) an. Die Daten-Vorwärts-Rückwärts-Zugriffs-Einheit (DVRZE) stellt durch das Stellwerk den Zugang auf den 3. Parameter her. Die Funktionssteuereinheit (FS) legt jetzt den Schlüssel für die Positionsinformtion des Parameters im Eingabefenster an. Die Daten-Vorwärts-Rückwärts-Zugriffs-Einheit (DVRZE) stellt durch das Stellwerk den Zugang auf diesen Datensatz her. Die Funktionssteuereinheit (FS) holt die Positionsinformation 5 (Zeile 5). Die Funktionssteuereinheit (FS) legt den Schlüssel für den Datensatz Parametertitel (PTITL) an. Die Daten-Vorwärts-Rückwärts-Zugriffs-Einheit (DVRZE) stellt den Zugang her. Die Funktionssteuereinheit (FS) holt über die Verbindung den Datensatz für den Parametertitel ("VORSCHUB"). Die Funktionssteuereinheit (FS) legt nacheinander die Schlüssel für den Zugriff auf die Datensätze Parametertyp (PTYP), Parameterformat (PFRMT) und den Zugangsschlüssel auf die Funktionskategorie (CAT) an und holt die zugehörigen Datensätze PTYP=GLK (Gleitkomma), PFRMT=4.3 (4-Vorkomma-, 3-Nachkommastellen) und für die Funktionskategorie CAT=TTM_VORS und baut den Parameter im Eingabefenster entsprechend dieser "Datensätze" auf. Die Funktionssteuereinheit (FS) erkennt dann nach Prüfung des Datensatzes CAT=TTM_VORS, daß die Applikationseinheit "Technologie-Tabellen-Modul - Vorschub (TTM_VORS)" für diesen Parameter aktiviert ist und startet die jeweilige Applikationseinheit. Die Funktionssteuereinheit (FS) startet nun die Applikationseinheit TTM, diese ermittelt die Vorschub und legt den entsprechenden Wert im Eingabefeld des Parameters als Vorschlag vor (Fig.24).
14-Die Funktionssteuereinheit (FS) legt jetzt den Schlüssel für den nächsten Eingabeparameter (BFPARA) an. Die Daten-Vorwärts-Rückwärts-Zugriffs-Einheit (DVRZE) stellt durch das Stellwerk den Zugang auf den 4. Parameter her. Die Funktionssteuereinheit (FS) legt jetzt den Schlüssel für die Positionsinformtion des Parameters im Eingabefenster an. Die Daten-Vorwärts-Rückwärts-Zugriffs-Einheit (DVRZE) stellt durch das Stellwerk den Zugang auf diesen Datensatz her. Die Funktionssteuereinheit (FS) holt die Positionsinformation 7 (Zeile 7). Die Funktionssteuereinheit (FS) legt den Schlüssel für den Datensatz Parametertitel (PTITL) an. Die Daten-Vorwärts-Rückwärts-Zugriffs-Einheit (DVRZE) stellt den Zugang her. Die Funktionssteuereinheit (FS) holt über die Verbindung den Datensatz für den Parametertitel ("KONTUR"). Die Funktionssteuereinheit (FS) legt nacheinander die Schlüssel für den Zugriff auf die Datensätze Parametertyp (PTYP), Parameterformat (PFRMT) und den Zugangsschlüssel auf die Funktionskategorie (CAT) an und holt die Zugehörigen Datensätze PTYP=TXT, PFRMT=8 (8-stellig) und für die Funktionskategorie CAT=GEO_KONT und baut den Parameter im Eingabefenster entsprechend dieser Datensätze auf (Fig.25). Die Funktionssteuereinheit (FS) erkennt dann nach Prüfung des Datensatzes CAT, daß die Applikationseinheit GEO (Geometrieeditor und Prozessor) für diesen Parameter aktiviert ist und startet die Applikationseinheit GEO ggf. dann, wenn der Anwender den Parameter im Eingabefenster angewählt hat und die Funktionstaste "Aufruf" drückt. Er erhält dann den Auswahl- und Eingabedialog für die Applikationeinheit Geometrieeditor und -Prozessor" vorgelegt und kann die für die Bearbeitung notwendige Schlichtkontur eingeben (Fig.26).
15- Wurde in der Funktionsbeschreibungseinheit (FS) kein weiterer Parameter festgelegt, so erhält die Funktionssteuereinheit" (FS) nach dem Anlegen des Schlüssels für einen nächsten Parameter von der Daten-Vorwärts-Rückwärts-Zugriffs-Einheit (DVRZE) die Information "Kein weiterer Parameter verfügbar" (NO-MORE-PARA) zurück und erkennt, daß alle Dialogsteuerinformationen interpretiert sind. Am Bildschirm ist jetzt der komplette Eingabedialog für die ausgewählte Bearbeitungsfunktion (BF) (im Beispiel SCHLICHTEN INNEN) angezeigt und kann vom Anwender mit den aktuell notwendigen Informationen für die Steuerung des aktuell gewünschten Maschinenablaufes versehen werden (Fig.27). Er gibt also das gewünschte Bearbeitungswerkzeug an, ändert ggf. noch Schnittgeschwindigkeit und Vorschub für die Werkzeugbewegung und gibt die nach der Teilezeichnung benötigte Bearbeitungskontur über den Geometrieeditor graphisch interaktiv ein (Fig.26).
16- Nach Eingabe der Informationen bestätigt der Anwender seine Eingaben mit "INPUT". Die Funktionssteuereinheit (FS) legt die Informationen wieder über die Daten-Vorwärts-Rückwärts-Zugriffs-Einheit (DVRZE) im Speicher des Programmiersystemes ab. Es entsteht damit ein "nicht mehr wertfreies" Steuerprogramm das die Steuerung des Bearbeitungsprozesses an der Maschine eindeutig festlegt. Der Zugriff beim Ablegen (Schreiben) der Daten erfolgt wie beim Lesen der Informationen für die Bearbeitungsfunktion (BF) über die Daten-Vorwärts-Rückwärts-Zugriffs-Einheit (DVRZE). Die Funktionssteuereinheit (FS) legt zu diesem Zweck die Zugangsschlüssel für die Position der Eingabeparameterdaten oder den Zugangsschlüssel für Ergebnisdaten der verschiedenen Applikationseinheiten, wie z.B. die Schlichtkontur als Ergebnis des Geometrieeditors und -prozessors den Schlüssel GEO-K an. Die Daten werden durch die Daten-Vorwärts-Rückwärts-Zugriffs-Einheit (DVRZE) über diesen Zugang an die entsprechende Zielposition geschrieben. Durch diesen Schreibvorgang über das Datenstellwerk der Daten-Vorwärts-Rückwärts-Zugriffs-Einheit (DVRZE) wird ein mit dem Programmiersystem so erstelltes Programm sofort bei der Eingabe in die Teildaten Maschinensteuerdaten und die Teildaten Dialogsteuerdaten aufgeteilt. Zur eindeutigen Verbindung von Maschinensteuerdaten und Dialogsteuerdaten setzt die Daten-Vorwärts-Rückwärts-Zugriffs-Einheit (DVRZE) dabei die benötigten Verknüpfungsschlüssel. Soll das so erstellte Programm jetzt an der Maschine zur Ausführung kommen, so trennt die Daten-Vorwärts-Rückwärts-Zugriffs-Einheit (DVRZE) diese Verknüpfungsschlüssel auf und überträgt den Maschinensteuerdatenteil in den Maschinenprogrammspeicher der CNC-Steuerung der Maschine (Datenauftrennung Fig.10). Es findet also nicht wie bei vorbekannten Autoprogrammiergeräten ein Übersetzungsvorgang (Compilierungslauf) zur Erzeugung des Maschinensteuerprogramms aus einem Quellprogramm und die damit zwangsläufig verbundene Datenreduktion statt. Der durch den Trennvorgang entstandene Maschinensteuerdatenteil kann vom Anwender im Programmspeicher der Maschinensteuerung geändert und optimiert werden.

Soll das geänderte Maschinenprogramm zu einem späteren Zeitpunkt im Dialog mit dem erfindungsgemäß realisierten Programmiersystem bearbeitet werden, so wird der Maschinendatenteil von der Daten-Vorwärts-Rückwärts-Zugriffs-Einheit (DVRZE) aus dem Maschinenprogrammspeicher der Steuerung geholt und über die eindeutigen Verknüpfungsschlüssel wieder mit dem zugehörigen Dialogdatenteil verbunden (Fig.10). Man erkennt sofort, daß durch diese technische Lösung durch die Funktion der Auftrennung und Zusammenführung innerhalb der Daten-Vorwärts-Rückwärts-Zugriffs-Einheit (DVRZE) über eindeutige Verknüpfungsschlüssel das Problem der Rückdokumentation von Maschinenprogrammänderungen gelöst ist.

## Patentansprüche

1. Dialogorientiertes Programmiersystem zur Erzeugung von Steuerprogrammen für eine CNC-Werkzeugmaschine, mit
- einer Dateneingabe- und Visualisierungseinrichtung (1, 2) zum Eingeben und/oder Ändern von Daten, die den gewünschten Steuerungsablauf der CNC-Werkzeugmaschine bestimmen;
- einer zentralen Speicher- und Verarbeitungseinheit (3) zur Speicherung der eingegebenen Daten sowie zur Steuerung der Eingabe der Daten und der Änderung eingegebener Daten, die die eingegebenen Daten zu Steuerungsdaten für eine Maschinensteuerung der CNC-Werkzeugmaschine verarbeitet und als Steuerprogramm für die CNC-Werkzeugmaschine zur Verfügung stellt;
- einem Datensteuerungsmodul, das das Steuerprogramm in einen Maschinenprogrammteil und einen Dialogprogrammteil trennt und diese getrennt in der Speicher- und Verarbeitungseinheit (3), in einem nicht-flüchtigen Hintergrundspeicher (6), oder in einem anderen Speicher des Programmiersystems speichert; und
- einer Ein-/Ausgabeeinheit zur Ausgabe des Maschinenprogramms an die Maschinensteuerung der CNC-Werkzeugmaschine, wobei der Maschinenprogrammteil auf der Maschinensteuerung eigenständig zur Steuerung der CNC-Werkzeugnaschine ablauffähig ist;
dadurch gekennzeichnet, daß
- das Programmiersystem Zugriffschlüssel zur Verfügung stellt, die die zu dem Steuerprogramm zu verarbeitenden Daten für die Maschinen- und die Dialogprogrammteile eindeutig einander zuordnet;
- das Datensteuerungsmodul zur Speicherung der Maschinen- und Dialogprogrammteile diese unter Verwendung der Zugriffschlüssel in entsprechende zueinander zugeordnete Programm- und Datenbereiche teilt und diese unter Verwendung der Zugriffschlüssel getrennt speichert; und
- das Datensteuerungsmodul Zugriffe auf die gespeicherten Programm- und/oder Datenbereiche so steuert, daß mittels der Zugriffschlüssel die Programm- und Datenbereiche des Maschinenprogramms und des Dialogprogramms auch bei Änderungen im Maschinenprogrammteil diese Änderungen eindeutig den zugehörigen Daten im Dialogprogrammteil zugeordnet werden und damit die im abgetrennten Maschinenprogrammteil durchgeführten Änderungen nach dem Wiederzusammenführen mit dem Dialogprogrammteil im gemeinsamen Programmteil im gemeinsamen Steuerprogramm vorliegen, so daß über den Dialogprogrammteil im Dialog auf die geänderten Daten in einer Weise zugegriffen werden kann, als ob die Änderungen im Dialogprogrammteil selbst durchgeführt worden währen.

2. Dialogorientiertes Programmiersystem nach Anspruch 1, dadurch gekennzeichnet, daß
- eine Datenbasis vorhanden ist, in der die eingegebenen Daten gemeinsam abgelegt werden, wobei die Datenbasis in einen Bereich für Maschinensteuerdaten und einen Bereich für Dialogsteuerdaten des Programmiersystems unterteilt ist;
- eine Funktionssteuereinheit in der zentralen Speicher- und Verarbeitungeinheit vorhanden ist, um mit den eingegebenen Daten ein Steuerprogramm für die CNC-Werkzeugmaschine zu erstellen;
- das Datensteuerungsmodul den Zugriff auf die Maschinensteuerdaten und die Dialogsteuerdaten in der Datenbasis und deren Verwaltung unter Verwendung der Zugriffsschlüssel ausführt; und
- das Steuerprogramm für die CNC-Werkzeugmaschine einen ersten Teil aufweist, der den Maschinenprogrammteil enthält, das nur die für den Ablauf des Programms an der CNC-Werkzeugmaschine benötigten Ablaufdaten umfaßt, und einen zweiten Teil aufweist, der den Dialogprogrammteil enthält, das alle systembedingten Zusatzinformationen umfaßt.

3. Dialogorientiertes Programmiersystem nach Anspruch 2, dadurch gekennzeichnet, daß
- das Datensteuerungsmodul eine Daten-Vorwärts-Rückwärts-Zugriffs-Einheit (DVRZE) ist, die unter Verwendung der Zugriffsschlüssel den Zugriff und die Verwaltung sowohl in einer Dialogquellebene des Programms als auch in dem Maschinenprogrammteil für die CNC-Werkzeugmaschine ausführt; und/oder daß
- das Datensteuerungsmodul eine Daten-Vorwärts-Rückwärts-Zugriffs-Einheit (DVRZE) ist, die die Ablaufdaten und die systembedingten Zusatzinformationen unter Verwendung der Zugriffsschlüssel zur Darstellung für den Anwender und zur Änderung zusammenführt und zur Ansteuerung der CNC-Werkzeugmaschine voneinander trennt; und/oder daß
- der Steuerungsablauf der CNC-Werkzeugmaschine als parametrisches Maschinenprogramm beschrieben ist, bei dem zu einzelnen Funktionen der CNC-Werkzeugmaschine Parameter festgelegt sind.

4. Dialogorientiertes Programmiersystem nach Anspruch 3, dadurch gekennzeichnet, daß die Daten-Vorwärts-Rückwärts-Zugriffs-Einheit (DVRZE) Eingaben bei der Programmerstellung unter Verwendung der Zugriffschlüssel in die Dialogsteuerdaten und die Maschinensteuerdaten auftrennt und eindeutige Verknüpfungsschlüssel zwischen die Dialogsteuerdaten und die Maschinensteuerdaten setzt.

5. Dialogorientiertes Programmiersystem nach Anspruch 4, dadurch gekennzeichnet, daß die Daten-Vorwärts-Rückwärts-Zugriffs-Einheit (DVRZE) die Verknüpfungsschlüssel zwischen dem Dialogsteuerdatenteil und dem Maschinensteuerdatenteil auftrennt und den Maschinensteuerdatenteil in einen Programmspeicher der Maschinensteuerung überträgt, wobei keine Übersetzung des Maschinensteuerdatenteils in den Maschinenprogrammteil stattfindet, bevor das erstellte Programm in der Steuerung der CNC-Werkzeugmaschine abläuft.

6. Dialogorientiertes Programmiersystem nach Anspruch 5, dadurch gekennzeichnet, daß die von der Daten-Vorwärts-Rückwärts-Zugriffs-Einheit (DVRZE) gesetzten Verknüpfungsschlüssel auch nach der Auftrennung zwischen dem Dialogsteuerdatenteil und dem Maschinensteuerdatenteil eindeutig erhalten bleiben und damit bei einer Änderung des im Maschinenprogrammspeicher gespeicherten Maschinensteuerdatenteils dieser von der Daten-Vorwärts-Rückwärts-Zugriffs-Einheit (DVRZE) zurückgeholt und eindeutig dem Dialogsteuerdatenteil durch Herstellung der Verbindungen über die Verknüpfungsschlüssel zugeordnet werden kann.

7. Dialogorientiertes Programmiersystem nach einem der Ansprüche 1 bis 6, dadurch gekennzeichnet, daß
- eine Funktionsbeschreibungseinheit (FB) zur Erstellung und Änderung von Bearbeitungsfunktionen durch einen Anwender vorhanden ist, wobei die Bearbeitungsfunktionen den im Programmiersystem verfügbaren Funktionsumfang für den Programmiervorgang mit dem Programmiersystem darstellen; und
- die Bearbeitungsfunktionen in der zentralen Speicher- und Verarbeitungseinheit (3) vorliegen.

8. Dialogorientiertes Programmiersystem nach Anspruch 7, dadurch gekennzeichnet, daß in der Funktionsbeschreibungseinheit (FB) bei der Erstellung und/oder Änderung von Bearbeitungsfunktionen eingegebene Daten beim Programmiervorgang über eine Eingabeeinheit (2) ausgewählt werden und der Funktionssteuereinheit zugeführt werden und durch die Funktionssteuereinheit die zu einer Bearbeitungsfunktion gehörenden Eingabedialoge erzeugt und dieser der Anzeigeeinheit (1) zur Wiedergabe zur Verfügung gestellt werden.

9. Dialogorientiertes Programmiersystem nach Anspruch 7 oder 8, dadurch gekennzeichnet, daß die Daten der Funktionsbeschreibungseinheit (FB) einer Steuerlistenerstellungseinheit (5) zugeführt werden.

10. Dialogorientiertes Programmiersystem nach einem dem Ansprüche 1 bis 9, dadurch gekennzeichnet, daß die Bearbeitungsfunktionen Funktionsattribute enthalten, die als Zugriffschlüssel zur Auslösung bestimmter Funktionsabläufe in der Funktionssteuereinheit dienen.

11. Dialogorientiertes Programmiersystem nach einem dem Ansprüche 1 bis 10, dadurch gekennzeichnet, daß eine Aktivierungseinheit vorhanden ist, mit der die Funktionsattribute aktivierbar sind.

12. Dialogorientiertes Programmiersystem nach Anspruch 11, dadurch gekennzeichnet, daß die Aktivierungseinheit aus den für die Bearbeitungsfunktionen eingegebenen Informationen eine Funktionssteuermatrix erstellt.

13. Dialogorientiertes Programmiersystem nach Anspruch 11 oder 12, dadurch gekennzeichnet, daß die Aktivierungseinheit in der Funktionsbeschreibungseinheit vorhanden ist.

14. Dialogorientiertes Programmiersystem nach Anspruch 10 oder 11, dadurch gekennzeichnet, daß die Funktionssteuermatrix die zur Erstellung des Steuerprogramms notwendigen Daten umfaßt, wobei die Matrix die aktivierbaren Funktionsattribute enthält.

15. Dialogorientiertes Programmiersystem nach einem der Ansprüche 2 bis 14, dadurch gekennzeichnet, daß Applikationseinheiten vorhanden sind, die dem Programmiersystem zur Verfügung stehende Hilfsfunktionen sind, die wahlfrei vom Anwender und/oder von der Funktionssteuereinheit aufgerufen werden können.

16. Dialogorientiertes Programmiersystem nach Anspruch 15, dadurch gekennzeichnet, daß
- die Applikationseinheiten eine Applikationseinheit (GEO) umfassen, die manuell im Maschinensteuerdatenteil in einem Maschinencode (G-Code) eingegebene und/oder geänderte Programmabschnitte liest, graphisch darstellt und graphisch interaktiv weiterverarbeitet; und
- ein Zugriff der Applikationseinheit (GEO) dabei von der Daten-Vorwärts-Rückwärts-Zugriffs-Einheit (DVRZE) über den Zugriffsschlüssel hergestellt wird, welche vom Anwender für Start und Ende des Programmabschnitts im Maschinensteuerdatenteil eingegeben wurden.

17. Dialogorientiertes Programmiersystem nach einem der Ansprüche 1 bis 16, dadurch gekennzeichnet, daß Änderungen des Maschinenprogrammteils für die CNC-Werkzeugmaschine durch das Datensteuerungsmodul in der Dialogquellebene des Programms ausgeführt werden.

18. Dialogorientiertes Programmiersystem nach einem der Ansprüche 1 bis 17, dadurch gekennzeichnet, daß die zentrale Speicher- und Verarbeitungseinheit (3) einen Systemprogrammspeicher, einen Arbeitsspeicher, und einen Parameterspeicher aufweist, wobei
- in dem Systemprogrammspeicher ein Ablaufprogramm für den Steuerungsablauf der CNC-Werkzeugmaschine mit allen systembedingten Zusatzinformationen, sowie ein Quellprogramm gespeichert ist;
- in dem Arbeitsspeicher aktuell benötigte System- und Anwenderprogramme sowie die damit zu verarbeitenden Daten und Ergebnisse gespeichert sind; und
- in dem Parameterspeicher die Adressen variabler Eingangs- und Steuerdaten gespeichert sind.

19. Dialogorientiertes Programmiersystem nach einem der Ansprüche 1 bis 18, dadurch gekennzeichnet, daß das Datensteuerungsmodul die Zugangsschlüssel selbständig erstellt, so daß den einzelnen Funktionseinheiten des Programmiersystems keine Informationen über den Aufbau einer Bearbeitungsfunktion und/oder des erstellten Steuerprogramms übermittelt werden.

## Claims

1. A dialog-oriented programming system for the generation of control programs for a CNC machine tool, comprising
- a data input and visualisation means (1, 2) for the input and/or modification of data which determine the desired control sequence of the CNC machine tool;
- a central storage and processing unit (3) for the storage of the input data as well as for controlling the input of data and the modification of input data, which processes the input data to control data for a machine controller of the CNC machine tool and provides this as a control program for the CNC machine tool;
- a data control module which splits the control program into a machine program part and a dialog program part and stores these separately in the storage and processing unit (3), in a non-volatile background memory (6), or in another memory of the programming system; and
- an input/output unit for the output of the machine program to the machine controller of the CNC machine tool, with the machine program part being capable of autonomously running on the machine controller for controlling the CNC machine tool;
characterised in that
- the programming system provides access codes which clearly assign the data for the machine and the dialog program parts to be processed to the control program to one another;
- the data control module for the storage of the machine and dialog program parts splits same under application of the access codes into corresponding program and data portions which are assigned to one another and stores same separately under application of the access codes; and
- the data control module controls accesses to the stored program and/or data portions in such a manner that by means of the access codes the program and data portions of the machine program and the dialog program even with modifications in the machine program part, these modifications are clearly assigned to the associated data in the dialog program part and thus the modifications carried out in the separated machine program part are available after the reunification with the dialog program part in the common program part so that the modified data can be accessed interactively via the dialog program part in a manner as if the modifications had been carried out in the dialog program part itself.

2. The dialog-oriented programming system according to Claim 1, characterised in that
- a data base is provided where the input data are commonly stored, with the data base being divided into a section for machine control data and a section for dialog control data of the programming system;
- a function control unit is provided in the central storage and processing unit for generating a control program for the CNC machine tool by means of the input data;
- the data control module performs the access to the machine control data and the dialog control data in the data base and their management by employing the access codes; and
- the control program for the CNC machine tool comprises a first part which contains the machine program part which only includes the sequence data which are required for the program execution on the CNC machine tool, and a second part which contains the dialog program part which includes all system-related supplementary information.

3. The dialog-oriented programming system according to Claim 2, characterised in that
- the data control module is a data forward/backward access unit (DVRZE) which under the employment of the access codes carries out the access and the management both in a dialog source level of the program as well as in the machine program section for the CNC machine tool;
and/or in that
- the data control module is a data forward/backward access unit (DVRZE) which under the employment of the access codes carries out combines the sequence data and the system-related supplementary data for the representation for the user and for modification and separates them from each other for driving the CNC machine tool; and/or in that
- the control sequence of the CNC machine tool is specified as a parametric machine program in which parameters are established for individual functions of the CNC machine tool.

4. The dialog-oriented programming system according to Claim 3, characterised in that the data forward/backward access unit (DVRZE) splits the inputs during the program generation under the employment of the access codes into dialog control data and machine control data and sets unique logic codes between the dialog control data and machine control data.

5. The dialog-oriented programming system according to Claim 4, characterised in that the data forward/backward access unit (DVRZE) splits the logic codes between the dialog control data portion and the machine control data portion and transmits the machine control data portion to a program memory of the machine controller, without a compilation of the machine control data portion being carried out prior to the execution of the generated program in the controller of the CNC machine tool.

6. The dialog-oriented programming system according to Claim 5, characterised in that the logic codes set by the data forward/backward access unit (DVRZE) are maintained unique even after splitting the dialog control data portion and the machine control data portion so that a machine control data portion which has been modified and is stored in the machine program memory can be retrieved by the data forward/backward access unit (DVRZE) and clearly assigned to the dialog control data portion by making the connections via the logic codes.

7. The dialog-oriented programming system according to one of Claims 1 through 6, characterized in that
- a function description unit (FB) for the generation and modification of machining functions by a user is provided, with the machining functions constituting the available scope of functions for the programming operation with the programming system; and
- the machining fuctions are available in the central storage and processing unit (3).

8. The dialog-oriented programming system according to Claim 7, characterised in that input data are selected in the function description unit (FB) at the generation and/or modification of machining functions during the programming operation via an input unit (2) and supplied to the function control module, and that the input dialogs associated with a machining function are generated by the function control unit and provided to the display unit (1) for reproduction.

9. The dialog-oriented programming system according to Claim 7 or 8, characterised in that the data of the function description unit (FB) are supplied to a control list generating unit (5).

10. The dialog-oriented programming system according to one of Claims 7 to 9, characterised in that the machining functions contain function attributes which serve as access codes for the initiation of certain function sequences in the function control unit.

11. The dialog-oriented programming system according to one of Claims 1 to 10, characterised in that an activation unit is provided by means of which the function attributes can be activated.

12. The dialog-oriented programming system according to Claim 11, characterised in that the activation unit generates a function control matrix from the information as input for the machining functions.

13. The dialog-oriented programming system according to Claim 11 or 12, characterised in that the activation unit is provided in the function description unit.

14. The dialog-oriented programming system according to Claim 10 or 11, characterised in that the function control matrix comprises the data required for the generation of the control program, with the matrix containing the activatable function attributes.

15. The dialog-oriented programming system according to one of Claims 2 to 14, characterised in that application units are provided which are auxiliary functions available to the programming system, which can be called optionally by the user and/or by the function control unit.

16. The dialog-oriented programming system according to Claim 15, characterised in that
- the application units comprise an application unit (GEO) which reads, graphically displays and further processes graphically in an interactive manner input and/or changed program portions manually input into the machine control data portion in a machine code (G code); and
- an access for the application unit (GEO) is made by the data forward/backward access unit (DVRZE) via the access code, which were input by the user for start and end of the program section in the machine control data portion.

17. The dialog-oriented programming system according to one of Claims 1 to 16, characterised in that modifications of the machine program part for the CNC machine tool are carried out by the data control module und dialog source level of the program.

18. The dialog-oriented programming system according to one of Claim 1 to 17, characterised in that the central storage and processing unit (3) comprises a system program memory, a main memory, and a parameter memory, with
- a sequence program for the control sequence of the CNC machine tool with all system-related supplementary information as well as a source program being stored in the system program memory;
- currently required system and applications programs as well as the data and results to be processed by same being storen in the main memory; and
- the addresses of variable input and control data being stored in the parameter memory.

19. The dialog-oriented programming system according to one of Claim 1 to 18, characterised in that the data control module generates the access codes independently so that no information concerning the construction of a machining function and/or the generated control program is transmitted to the individual function units of the programming system.

## Revendications

1. Système de programmation orienté dialogues pour la génération de programmes de commande pour une machine-outil CNC, comprenant :
- un dispositif (1, 2) de saisie et de visualisation de données pour l'entrée et/ou la modification de données déterminant le déroulement souhaité de la commande de la machine-outil CNC ;
- une unité centrale (3) de stockage et de traitement pour l'enregistrement des données entrées et pour la commande de l'entrée des données et de la modification de données entrées, laquelle unité centrale traite les données entrées pour former des données de commande destinées à une commande de la machine-outil CNC et les met à disposition comme programme de commande pour la machine-outil CNC ;
- un module de commande de données qui sépare le programme de commande en une partie de programme de machine et en une partie de programme de dialogue et qui enregistre celles-ci séparément dans l'unité (3) de stockage et de traitement, dans une mémoire permanente de fond (6) ou dans une autre mémoire du système de programmation ; et
- une unité d'entrée/sortie pour la sortie du programme de machine vers la commande de la machine-outil CNC, la partie de programme de machine pouvant se dérouler sur la commande de machine de manière autonome pour la commande de la machine-outil CNC ;
caractérisé
- en ce que le système de programmation prépare des clés d'accès qui associent de manière univoque les données à traiter pour former le programme de commande, pour la partie de programme de machine et celles pour la partie de programme de dialogue ;
- en ce que, pour l'enregistrement des parties de programme de machine et de programme de dialogue, le module de commande de données sépare celles-ci en utilisant les clés d'accès en zones de programme et de données correspondantes associées l'une à l'autre et enregistre celles-ci séparément en utilisant les clés d'accès ; et
- en ce que le module de commande de données commande des accès aux zones de programme et/ou de données enregistrées de telle sorte que les zones de programme et de données du programme de machine et du programme de dialogue ainsi que des modifications lors de modifications dans la partie de programme de machine sont associées au moyen des clés d'accès de manière univoque aux données correspondantes dans la partie de programme de dialogue et que, ainsi, les modifications effectuées dans la partie de programme de machine séparée sont présentes dans la partie de programme commune dans le programme de commande commun après la réunion avec la partie de programme de dialogue de manière à pouvoir accéder aux données modifiées par l'intermédiaire de la partie de programme de dialogue lors du dialogue comme si les modifications avaient été effectuées dans la partie de programme de dialogue elle-même.

2. Système de programmation orienté dialogues selon la revendication 1, caractérisé
- en ce qu'il existe une base de données dans laquelle les données entrées sont enregistrées en commun, la base de données étant divisée en une zone pour des données de commande de machine et en une zone pour des données de commande de dialogue du système de programmation ;
- en ce qu'il existe une unité de commande de fonctions dans l'unité centrale de stockage et de traitement afin d'élaborer avec les données entrées un programme de commande pour la machine-outil CNC ;
- en ce que le module de commande de données met en oeuvre l'accès aux données de commande de machine et aux données de commande de dialogue dans la base de données et la gestion de ces données en utilisant les clés d'accès ;
et
- en ce que le programme de commande destiné à la machine-outil CNC comporte une première partie, qui contient la partie de programme de machine qui comprend seulement les données de déroulement nécessaires au déroulement du programme sur la machine-outil CNC, et une deuxième partie, qui contient la partie de programme de dialogue qui comprend toutes les informations complémentaires liées au système.

3. Système de programmation orienté dialogues selon la revendication 2, caractérisé
- en ce que le module de commande de données est une unité d'accès aux données en va-et-vient (DVRZE) qui met en oeuvre en utilisant les clés d'accès, l'accès et la gestion aussi bien dans un niveau de source de dialogue du programme que dans la partie de programme de machine pour la machine-outil CNC ; et/ou
- en ce que le module de commande de données est une unité d'accès aux données en va-et-vient (DVRZE) qui rassemble les données de déroulement et les informations complémentaires liées au système en utilisant les clés d'accès en vue d'un affichage pour l'utilisateur et d'une modification et qui les sépare les unes des autres en vue de la commande de la machine-outil CNC ; et/ou
- en ce que le déroulement de commande de la machine-outil CNC est décrit sous forme de programme de machine paramétré selon lequel des paramètres sont spécifiés pour des fonctions individuelles de la machine-outil CNC.

4. Système de programmation orienté dialogues selon la revendication 3, caractérisé en ce que l'unité d'accès aux données en va-et-vient (DVRZE) sépare des entrées lors de l'élaboration de programme en utilisant les clés d'accès en données de commande de dialogue et en données de commande de machine et spécifie des clés de chaînage univoques entre les données de commande de dialogue et les données de commande de machine.

5. Système de programmation orienté dialogues selon la revendication 4, caractérisé en ce que l'unité d'accès aux données en va-et-vient (DVRZE) sépare les clés de chaînage entre la partie de données de commande de dialogue et la partie de données de commande de machine et transfère la partie de données de commande de machine dans une mémoire de programme de la commande de machine, aucun transfert de la partie de données de commande de machine dans la partie de programme de machine n'ayant lieu avant que le programme élaboré ne se déroule dans la commande de la machine-outil CNC.

6. Système de programmation orienté dialogues selon la revendication 5, caractérisé en ce que les clés de chaînage spécifiées par l'unité d'accès aux données en va-et-vient (DVRZE) sont conservées de manière univoque même après la séparation entre la partie de données de commande de dialogue et la partie de données de commande de machine et ainsi, lors d'une modification de la partie de données de commande de machine enregistrée dans la mémoire de programme de machine, cette partie modifiée peut être récupérée par l'unité d'accès aux données en va-et-vient (DVRZE) et peut être associée de manière univoque à la partie de données de commande de dialogue par l'établissement des liens par l'intermédiaire des clés de chaînage.

7. Système de programmation orienté dialogues selon l'une des revendications 1 à 6, caractérisé
- en ce qu'il existe une unité de description de fonctions (FB) pour l'élaboration et la modification de fonctions d'usinage par un utilisateur, les fonctions d'usinage représentant la gamme de fonctions disponible dans le système de programmation pour l'opération de programmation avec le système de programmation ; et
- en ce que les fonctions d'usinage se trouvent dans l'unité centrale (3) de stockage et de traitement.

8. Système de programmation orienté dialogues selon la revendication 7, caractérisé en ce que, dans l'unité de description de fonctions (FB), lors de l'élaboration et/ou de la modification de fonctions d'usinage, des données entrées peuvent être sélectionnées lors de l'opération de programmation par l'intermédiaire d'une unité d'entrée (2) et être envoyées à l'unité de commande de fonctions et en ce que, par l'unité de commande de fonctions, les dialogues d'entrée appartenant à une fonction d'usinage sont produits et sont mis à la disposition de l'unité d'affichage (1) en vue de leur affichage.

9. Système de programmation orienté dialogues selon la revendication 7 ou 8, caractérisé en ce que les données de l'unité de description de fonctions (FB) sont envoyées à une unité de création de listes de commandes (5).

10. Système de programmation orienté dialogues selon l'une des revendications 1 à 9, caractérisé en ce que les fonctions d'usinage contiennent des attributs de fonctions qui servent de clés complémentaires pour le déclenchement de certains déroulements de fonctions dans l'unité de commande de fonctions.

11. Système de programmation orienté dialogues selon l'une des revendications 1 à 10, caractérisé en ce qu'il existe une unité d'activation avec laquelle les attributs de fonctions sont activables.

12. Système de programmation orienté dialogues selon la revendication 11, caractérisé en ce que l'unité d'activation élabore une matrice de commande de fonctions à partir des informations entrées pour les fonctions d'usinage.

13. Système de programmation orienté dialogues selon la revendication 11 ou 12, caractérisé en ce que l'unité d'activation se trouve dans l'unité de description de fonctions.

14. Système de programmation orienté dialogues selon la revendication 10 ou 11, caractérisé en ce que la matrice de commande de fonctions comprend les données nécessaires à l'élaboration du programme de commande, la matrice contenant les attributs de fonctions activables.

15. Système de programmation orienté dialogues selon l'une des revendications 2 à 14, caractérisé en ce qu'il existe des unités d'application qui sont des fonctions auxiliaires qui sont mises à la disposition du système de programmation et qui peuvent être appelées à volonté par l'utilisateur et/ou par l'unité de commande de fonctions.

16. Système de programmation orienté dialogues selon la revendication 15, caractérisé
- en ce que les unités d'application comprennent une unité d'application (GEO) qui lit des sections de programme entrées et/ou modifiées manuellement dans un code machine (code G) dans la partie de données de commande de machine, les représente graphiquement et les traite encore graphiquement de façon interactive ; et
- en ce qu'un accès pour l'unité d'application (GEO) est alors établi par l'unité d'accès aux données en va-et-vient (DVRZE) par l'intermédiaire des clés d'accès qui ont été entrées par l'utilisateur pour le début et la fin de la section de la section de programme dans la partie de données de commande de machine.

17. Système de programmation orienté dialogues selon l'une des revendications 1 à 16, caractérisé en ce que des modifications de la partie de programme de machine pour la machine-outil CNC sont effectuées par le module de commande de données dans le niveau de source de dialogue du programme.

18. Système de programmation orienté dialogues selon l'une des revendications 1 à 17, caractérisé en ce que l'unité centrale (3) de stockage et de traitement comporte une mémoire de programmes de système, une mémoire de travail et une mémoire de paramètres,
- un programme de déroulement pour le déroulement de commande de la machine-outil CNC avec toutes les informations complémentaires liées au système ainsi qu'un programme source étant enregistrés dans la mémoire de programmes de système ;
- des programmes de système et d'utilisateur actuellement nécessaires et les données à traiter avec ces programmes ainsi que des résultats étant enregistrés dans la mémoire de travail ; et
- les adresses de données variables d'entrée et de commande étant enregistrées dans la mémoire de paramètres.

19. Système de programmation orienté dialogues selon l'une des revendications 1 à 18, caractérisé en ce que le module de commande de données établit de façon autonome les clés d'accès de telle sorte qu'aucune information concernant la structure d'une fonction d'usinage et/ou du programme de commande élaboré n'est transmise aux unités de fonctions individuelles du système de programmation.
